# EUROPEAN PATENT APPLICATION

(11) **EP 4 841 625 A1**
(43) Date of publication of application: **18.11.2026**
(21) Application number: 26178135.5
(22) Date of filing: 12.05.2026
(51) Int. Cl.: G10L 15/22, G06F 40/58, H04L 12/18, G10L 15/00

(54) **SIMULTANEOUS TRANSLATION WITH DYNAMIC LANGUAGE ADAPTATION DURING A VIRTUAL MEETING**

(30) Priority: 12.05.2025 US 202519205836
(71) Applicant: Google LLC, Mountain View, CA 94043 (US)
(72) Inventor: KARLSSON, Maria Josefin, Mountain View, 94043 (US); KLEINHOUT, Huib Victor, Mountain View, 94043 (US); POSTMA, Carolien, Mountain View, 94043 (US); PORSELAND, Henrik, Mountain View, 94043 (US); DOMINIQUE, Esbjörn, Mountain View, 94043 (US)
(74) Representative: Anderson, Oliver Ben

(57) **Abstract**

Systems and methods for providing simultaneous translation with dynamic language adaptation during a virtual meeting. A first media stream of the virtual meeting is received from a user device of a first user of a plurality of users participating in the virtual meeting. A first language of a first audio of the first media stream is identified. Language preferences for at least a subset of the users are identified. One or more second audios are generated based on the language preferences. For each user in the subset of users, the first audio is determined to satisfy a translation condition for the respective user, and a second audio of the one or more second audios is added to the first media stream provided to a user device of the respective user during the virtual meeting, in a language corresponding to the profile of the respective user.

## Description

### TECHNICAL FIELD

Aspects and implementations of the present disclosure relate to providing simultaneous translation with dynamic language adaptation during a virtual meeting.

### BACKGROUND

Virtual meetings can take place between multiple participants via a virtual meeting platform. A virtual meeting platform can enable users to connect with other users through a video-based and/or an audio-based virtual meeting (e.g., a conference call, or a virtual meeting). The virtual meeting platform can provide tools that allow multiple client devices to connect over a network and share each other's audio data (e.g., a voice of a user recorded via a microphone of a client device) and/or video data (e.g., a video captured by a camera of a client device, or video captured from a screen image of the client device) for efficient communication. Virtual meetings are increasingly used to facilitate communication between participants located in different regions of the world. These meetings often involve a large number of attendees who speak different languages.

### SUMMARY

The below summary is a simplified summary of the disclosure in order to provide a basic understanding of some aspects of the disclosure. This summary is not an extensive overview of the disclosure. It is intended neither to identify key or critical elements of the disclosure, nor delineate any scope of the particular implementations of the disclosure or any scope of the claims. Its sole purpose is to present some concepts of the disclosure in a simplified form as a prelude to the more detailed description that is presented later.

In some implementations, a system and method are disclosed for providing simultaneous translation with dynamic language adaptation during virtual meetings. In an implementation, a method includes receiving, from a first user device of a first user of a plurality of users participating in a virtual meeting, a first media stream of the virtual meeting. The method includes identifying a first language of a first audio of the first media stream. In some implementations, the first language is identified using an artificial intelligence model. The method includes identifying language preference for at least a subset of the plurality of users, and causing one or more second audios to be generated for the first media stream based on the language preferences. The method includes, for each user in the at least the subset of the plurality of users, determining, based on a profile of a respective user of the at least the subset of the plurality of users, that the first audio satisfies a translation condition for the respective user, and causing a respective second audio of the one or more second audios to be added to the first media stream provided to a user device of the respective user during the virtual meeting, wherein the respective second audio is in a second language corresponding to the profile of the respective user.

In some implementations, causing the respective second audio of the one or more audios to be added to the first media stream provided to the user device of the respective user during the virtual meeting is performed in real-time.

In some implementations, the profile of the respective user comprises the language preferences for the respective user, wherein the language preferences comprise at least one of: (1) one or more spoken language preferences, or (2) one or more listening language preferences. In some implementations, the translation condition for the respective is satisfied responsive to determining that the first language does not match at least one of the one or more listening language preferences. In some implementations, the first language is one of the one or more spoken language preferences of the first user. In some implementations, the profile of the respective user comprises an indication of consent for translation, and the at least the subset of the plurality of users comprises one or more of the plurality of users for which the respective profile comprises the indication of consent for translation.

In some implementations, the first media stream comprises a first portion and a second portion, and the first portion is in the first language and the second portion is in a different language, wherein the first audio corresponds to the first portion. In some implementations, the method can further include identifying a part of the first media stream where an audio of the first media stream changes from the first language to a different language, wherein the first audio ends at the part of the first media stream.

In some implementations, to cause the one or more second audios to be generated for the first media stream based on the language preferences, the method can further include identifying, based on the language preferences, one or more second languages. The method can further include providing, as input to an artificial intelligence (AI) model, the first audio and the one or more second languages. The AI model can be trained to provide the one or more second audios. Each of the one or more second audios can correspond to one of the one or more second languages. The method can further include receiving, as output from the AI model, the one or more second audios, wherein each of the one or more second audios corresponds to one of the one or more second languages.

In some implementations, the method may further comprise, while the virtual meeting is ongoing: monitoring, in real-time, the presence of the plurality of users in the virtual meeting; determining that a user of the at least the subset of the plurality of users has left the virtual meeting; and responsive to determining that no remaining user in the at least the subset of the plurality of users has language preferences corresponding to a specific second language of the one or more second audios, causing generation of the second audio that is in the specific second language to be ceased. In some implementations, the method may further comprise, while the virtual meeting is ongoing: identifying that an additional user has joined the virtual meeting; identifying language preferences for the additional user; determining, based on a profile of the additional user, that the first audio satisfies a translation condition for the additional user; identifying that a specific second language of the one or more second audios already being generated matches the language preferences of the additional user; and responsive to identifying the match, routing the second audio that is in the specific second language to a user device of the additional user by causing the second audio that is in the specific second language to be added to the first media stream provided to the user device of the additional user. In some implementations, the method may further comprise, while the virtual meeting is ongoing: identifying a change in the language preferences for a respective user of the at least the subset of the plurality of users; identifying that the first language matches the changed language preferences of the respective user; and responsive to identifying that the first language matches the changed language preferences of the respective user, causing the addition of the respective second audio to the first media stream provided to the user device of the respective user to be ceased, such that the respective user receives the first audio and not the respective second audio.

An aspect of the disclosure provides a system including a memory device and a processing device communicatively coupled to the memory device. The processing device performs the method as described above.

An aspect of the disclosure provides a computer-readable storage medium (which can be a non-transitory computer-readable storage medium, although the disclosure is not limited to that) stores instructions which, when executed, cause a processing device to perform the method as described above.

### BRIEF DESCRIPTION OF THE DRAWINGS

Aspects and implementations of the present disclosure will be understood more fully from the detailed description given below and from the accompanying drawings of various aspects and implementations of the disclosure, which, however, should not be taken to limit the disclosure to the specific aspects or implementations, but are for explanation and understanding only.
**FIG. 1** illustrates an example system architecture, in accordance with at least one embodiment of the present disclosure.
**FIG. 2** illustrates an example of an enrollment system, in accordance with at least one embodiment of the present disclosure.
**FIG. 3** shows an example of a language matching system, in accordance with at least one embodiment of the present disclosure.
**FIG. 4** is a flow diagram of an example method for providing simultaneous translation with dynamic language adaptation during virtual meeting, in accordance with at least one embodiment of the present disclosure.
**FIG. 5A** illustrates a schematic block diagram for an artificial intelligence (AI) training subsystem of a virtual meeting platform, in accordance with at least one embodiment of the present disclosure.
**FIG. 5B** illustrates a schematic block diagram for an AI inference subsystem of a virtual meeting platform, in accordance with at least one embodiment of the present disclosure.
**FIG. 6** is a block diagram illustrating an exemplary computer system, in accordance with at least one embodiment of the present disclosure.

### DETAILED DESCRIPTION

Aspects of the present disclosure relate to providing simultaneous translation with dynamic language adaptation during virtual meetings. A virtual meeting refers to a real-time communication session, such as a virtual meeting call, also known as a video-based call or video chat, in which participants can connect with multiple additional participants, via a virtual meeting platform, in real-time and be provided with audio and video capabilities. A virtual meeting platform can enable video-based virtual meetings between multiple participants via client devices that are connected over a network and share each other's audio (e.g., voice of a user recorded via a microphone of a client device) and/or video streams (e.g., a video captured by a camera of a client device) during a virtual meeting. In some instances, the virtual meeting platform can enable a significant number of client devices (e.g., up to one hundred or more client devices) to be connected via the virtual meeting.

In some instances, the image-based video data can depict a user or a group of users that are participating in the virtual meeting. The audio data can include, in some instances, an audio stream of audio provided by the user or group of users during the virtual meeting. Some existing virtual meeting platforms can provide a virtual meeting user interface (UI) to each client device connected to the virtual meeting, where the virtual meeting UI visually represents the video streams shared over the network in a set of regions in the UI. For example, the video stream of a participant who is speaking to the other participants in the virtual meeting can be visually represented in a designated region in the UI of the virtual meeting platform.

Some virtual meeting platforms may enable interpreter-based audio translation that provides translation between a single source and target language pair, potentially overlooking the diverse landscape of multi-user virtual meetings. This can result in some participants receiving audio translations that they cannot understand, and/or requiring manual settings adjustments during the virtual meeting to accommodate different language proficiencies. These limitations may not only lead to mismatched or delayed translations but also to inefficient use of computing resources, as unnecessary or redundant translation streams may be generated without regard to participants' actual language needs. Such inefficiencies are magnified in large-scale meetings, where resource optimization is essential for maintaining system performance and scalability.

Aspects of the present disclosure address the above-noted and other deficiencies by providing intelligent mechanisms to leverage individual participants' language preferences for optimizing the concurrent delivery of synchronized audio content to the plurality of participants. In particular, the systems described in the present disclosure can match the language preferences of multiple participants of a virtual meeting to provide simultaneous multi-language speech-to-speech translations in real-time during a virtual meeting. The multi-language speech-to-speech audio translation capability can be native to the virtual meeting platform. The virtual meeting platform can provide an enrollment and/or consent process to enable a real-time speech-to-speech translation feature during virtual meetings. In some embodiments, the enrollment and/or consent process can be performed the first time the speech-to-speech translation feature is enabled within the platform, the first time the virtual meeting platform is launched, when a participant first joins a virtual meeting, and/or at any other appropriate time. In some embodiments, the enrollment and/or consent process can be performed at the user's request. In some embodiments, the enrollment and/or consent process provides an option for users who have provided consent to withdraw their consent at any time.

In some embodiments, the enrollment process enables a user to specify their language preferences, such as which language(s) the user speaks, which language(s) the user understands when spoken to, and/or which language(s) the user prefers for translation during a particular virtual meeting(s) or any virtual meeting facilitated by the virtual meeting platform. In some embodiments, the virtual meeting platform can detect language preferences based on existing user profile, user settings, system settings, and/or user activity. In some embodiments, the consent process enables the user to provide explicit consent to have their speech translated during a virtual meeting. In some cases, the user may not satisfy certain translation requirements, such as age restrictions or geographical location restrictions (e.g., certain jurisdictions may require a user to be at least 13 years old or 18 years old in order to consent to speech-to-speech translation; certain jurisdictions may prohibit real-time speech-to-speech translation altogether). In such cases, the enrollment and/or consent process and the speech-to-speech translation feature may be disabled. Thus, the enrollment and/or consent process enables a user to provide and/or modify consent, and/or to provide and/or modify their language preferences by explicitly indicating the languages they understand, speak, and/or prefer for translation within the virtual meeting platform settings. Following the enrollment and/or consent process, the virtual meeting platform can create or update a user-specific language profile that indicates the user's consent status and/or the user's language preferences.

In some embodiments, during a virtual meeting (including when the meeting is launched by the host, when a user joins the meeting, or anytime during the virtual meeting), the native speech-to-speech translation feature can be enabled. In some embodiments, the speech-to-speech translation feature can be enabled automatically, e.g., if at least one participant has consented to speech-to-speech translation (e.g., during the enrollment and/or consent process). Additionally or alternatively, the speech-to-speech translation feature can be enabled manually by one or more participants of the virtual meeting.

In some embodiments, during a virtual meeting in which the speech-to-speech translation feature has been enabled, the virtual meeting platform can automatically detect in real-time which language is being spoken in a received media stream of the virtual meeting. For example, as a user begins speaking or when a user switches between languages, the virtual meeting platform can detect the spoken language. In some embodiments, the virtual meeting platform can use artificial intelligence (AI) to detect the spoken language.

During the virtual meeting, the virtual meeting platform can access the user-specific language profiles of the virtual meeting participants who have enabled and/or consented to speech-to-speech translation. The participants who have enabled and/or consented to speech-to-speech translation can sometimes be referred to herein as "active participants." The virtual meeting platform can analyze the collective language preferences of the active participants to optimize the flow of translated audio to the active participants. The virtual meeting platform can match language preferences of the active participants to identify which users will receive a translation and in which language, and which users will receive the original audio. If the collective language preferences of the active participants reflect that there is at least one user that does not understand the identified spoken language, the virtual meeting platform can simultaneously generate (or cause to be generated) multiple audio translations of an audio portion of the media stream of the virtual meeting. The audio translations can correspond to the languages identified in the collective language preferences of the active participants. In some embodiments, the translations can be generated using AI.

For each active participant, the virtual meeting platform can then determine whether to replace the audio portion of the media stream with one of the audio translations. In some embodiments, rather than replacing the audio portion of the media stream with one of the audio translations, the virtual meeting platform can provide the audio translation in addition to the original audio portion in the media stream. For example, the virtual meeting platform can cause playback of one of the audio translations to overlay playback of the original audio portion. The virtual meeting platform can dynamically adapt translation routing as participants join or leave, as participants change their language preference and/or consent settings, and/or as participants enable or disable the native speech-to-speech translation feature of the virtual meeting platform. In some embodiments, participants can retain control over their individual translation settings and can manually select or adjust the translation language they receive.

In some embodiments, the virtual meeting platform enables multi-source to multi-target translations in a virtual meeting and provides intelligent translation routing by analyzing the collective language preferences of the participants and optimizing the translation flows based on the analysis. For example, if a speaker is speaking English, and there are participants who have indicated a preference for listening in Spanish and others for listening in French, the virtual meeting platform can route the English audio for translation into both Spanish and French concurrently, directed to the respective users.

Advantages of the present disclosure result in a number of technological advantages over previous solutions including, for example, improved overall performance of the virtual meeting platform. In particular, the aspects of the present disclosure provide an effective utilization of individual participant's user-declared language proficiencies to facilitate optimal translation routing and delivery within a virtual meeting platform, all while maintaining user privacy and consent. By optimizing the real-time translation routing and delivery during the virtual meeting, aspects of the present disclosure improve the overall efficiency of the virtual meeting platform and reduce translation distribution latency. For example, the virtual meeting platform no longer relies on users manually adjusting translation or language preference settings during the virtual meeting to generate and/or provide translations of the audio. The virtual meeting platform can automatically identify each participant's language preferences and dynamically adapt translation flows based on the collective language preference settings of active participants, thus providing a more seamless and inclusive communication experience for multilingual virtual meetings. The functionalities provided by aspects of the present disclosure can avoid the unnecessary consumption of computing resources (e.g., network, processing, computational, and/or memory resources) used while a participant attempts to adjust or modify the translation settings during a virtual meeting. Additionally, by allowing users to specify which language(s) they understand and which language(s) they speak, the functionalities provided by aspects of the present disclosure can avoid the unnecessary consumption of computing resources (e.g., network, processing, computational, and/or memory resources) used in distributing unwanted translations to participants. Additionally, the functionality of the virtual platform to dynamically match language preferences between participants to optimize translation flows, as described throughout, enables simultaneous translation for multiple participants with minimal latency and efficient resource consumption, including in large-scale meetings. The simultaneous translation functionality can support virtual meetings with varying number of participants with diverse language preferences, dynamically adapting to translation routing as participants join or leave, with minimal latency and computing resource consumption.

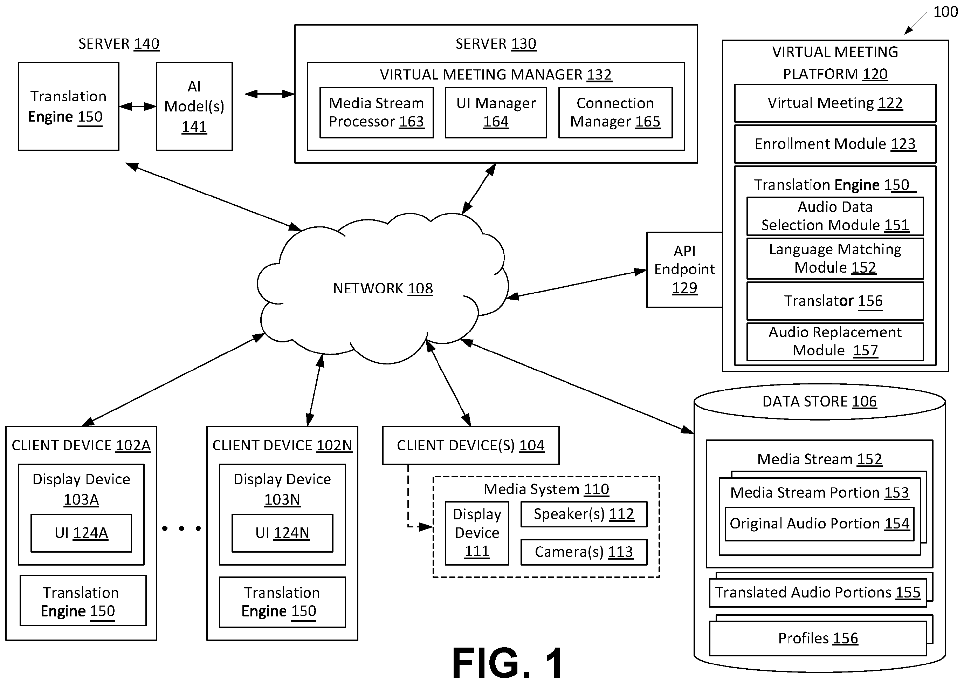

**FIG. 1** illustrates an example system architecture 100, in accordance with at least one embodiment of the present disclosure. System architecture 100 (also referred to as "system" herein) includes client devices 102A-102N, one or more client devices 104, virtual meeting platform 120, servers 130, 140, and data store 106, each connected to network 108.

In some implementations, network 108 can include a public network (e.g., the Internet), a private network (e.g., a local area network (LAN) or wide area network (WAN)), a wired network (e.g., Ethernet network), a wireless network (e.g., an 802.11 network or a Wi-Fi network), a cellular network (e.g., a Long Term Evolution (LTE) network), routers, hubs, switches, server computers, and/or a combination thereof.

In some implementations, data store 106 is a persistent storage that is capable of storing data as well as data structures to tag, organize, and index the data. In some implementations, data can include one or more of structured data, unstructured data, vectorized data, etc., or types of digital files, including text data, audio data, image data, video data, multimedia, interactive media, data objects, and/or any suitable type of digital resource, among other types of data. An example of data stored at the data store 106 can include a file, database record, database entry, programming code or document, among others. Data store 106 can be hosted by one or more storage devices, such as main memory, magnetic or optical storage-based disks, tapes or hard drives, network-attached storage (NAS), storage area network (SAN), and so forth. In some implementations, data store 106 can be a network-attached file server, while in other implementations data store 106 can be some other type of persistent storage such as an object-oriented database, a relational database, and so forth, that can be hosted by virtual meeting platform 120 or one or more different machines (e.g., the server(s) 130, 140) coupled to the virtual meeting platform 120 via network 108.

In some implementations, data store 106 can include media stream(s) data 152, translated audio portion(s) data 155, and/or profile(s) data 156. Media stream(s) 152 can include media stream portion(s) 153 and/or original audio portions(s) 154. Media stream data 152 can include audio data and/or video data, in accordance with implementations described herein. In some implementations, audio and/or video data can include raw data produced by a microphone and/or camera (e.g., connected to a client device 102A-102N, 104), sometimes referred to as audio and/or video feed. In some implementations, audio and/or video data can include processed (e.g., encoded) video and/or audio data, sometimes referred to as audio and/or video streams. Media stream data 152 can store media streams (e.g., audio and/or video streams) received from the client devices 102A-102N, 104, for the virtual meeting platform 120. Moreover, the data store 106 can optionally store various types of documents, such as a slide presentation, a text document, a spreadsheet, or any suitable electronic document (e.g., an electronic document including text, tables, videos, images, graphs, slides, charts, software programming code, designs, lists, plans, blueprints, maps, transcripts, etc.). These documents can be shared with users of the client devices 102A-102N, 104, and/or concurrently editable by the users.

In some implementations, virtual meeting platform 120 can include a virtual meeting 122, an enrollment module 123, and/or a translation engine 150. Virtual meeting platform 120 can enable users of client devices 102A-102N and/or client device(s) 104 to connect with each other via a virtual meeting (e.g., a virtual meeting 122). A virtual meeting refers to a real-time communication session such as a virtual meeting call, also known as a video-based call or video chat, in which participants can connect with multiple additional participants in real-time and be provided with audio and video capabilities. Real-time communication refers to the ability for users to communicate (e.g., exchange information) instantly without transmission delays and/or with negligible (e.g., milliseconds or microseconds) latency. Virtual meeting platform 120 can allow a user (e.g., a participant of the virtual meeting 122) to join and participate in a virtual meeting 122 with other users of the platform 120 (e.g., other participants of the virtual meeting 122). Implementations of the present disclosure can be implemented with any number of participants connecting via the virtual meeting 122.

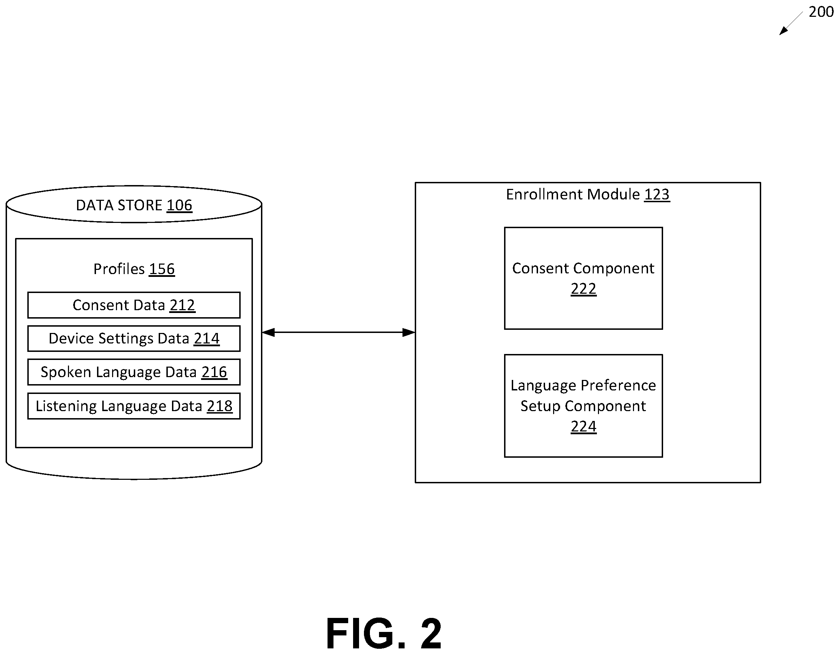

In some implementations, virtual meeting platform 120 can include an enrollment module 123. In some implementations, at least a portion of the enrollment module 123 can be included in client device 102A-102N, 104, servers 130, 140, or other elements of the system 100. The enrollment module 123 can receive data provided by client device(s) 102A-102N, 104, and can store the received data in profiles 156. The enrollment module 123 can implement an enrollment and/or consent process that enables a user of a user device 102A-102N, 104 to enable and/or disable the speech-to-speech translation feature of the virtual meeting platform during the virtual meeting, which can include providing consent to have their voice translated into a different language. When a participant enables the speech-to-speech translation feature and/or provides consent for the speech-to-speech translation feature, the participant is sometimes referred to herein as an "active participant." The enrollment module 123 can store an indication of whether a user of a user device 102A-102N, 104 has enabled and/or consented to the speech-to-speech translation feature in profiles 156. The enrollment module 123 can enable a user of a user device to specify which language(s) they understand and which language(s) they speak, and/or which language(s) the user prefers for translation during a particular virtual meeting(s) or any virtual meeting facilitated by the virtual meeting platform 120. The enrollment module 123 can store the language preference(s) in profiles 156. The enrollment module 123 and profiles data 156 are further described with respect to **FIG. 2****.**

In some implementations, virtual meeting platform 120 can include translation engine 150. In some implementations, at least a portion of the translation engine 150 can be included in client device 102A-102N, 104, servers 130, 140, or other elements of the system 100. The translation engine 150 can include an audio data selection module 151, a language matching module 152, a translator 156, and/or an audio replacement module 157. In some implementations, the translation engine 150 may not include the translator 156, and may access the translator 156 hosted by another element of the system 100.

During a virtual meeting 122, the translation engine 150 can receive (or otherwise identify) media stream data 152. A media stream can refer to a real-time communication of a continuous sequence of encoded data packets representing audio, video, and/or other media content transmitted over a network (e.g., network 108). In some implementations, the media stream 152 may be encapsulated using the Real-time Transport Protocol (RTP), with associated control signaling provided by the Real-time Control Protocol (RTCP) to support synchronization, packet loss recovery, and quality monitoring. Stream parameters, including codec selection, bitrate, and resolution, may be dynamically adapted in response to fluctuating network conditions to maintain low latency and consistent media quality, such as by the connection manager 165 of the virtual meeting manager 132, described below.

In some implementations, the media stream 152 can include one or more media stream portions 153. In some implementations, each media stream portion 153 corresponds to a duration of a portion of the media stream 152 (e.g., a time interval). For example, the media stream portions 153 may represent 5-second intervals of the media stream 152. That is, each media stream portion 153 may include media data for sequential 5-second time intervals of the media stream 152. In some implementations, each media stream portion 153 includes a predetermined number of data packet(s) of the continuous sequence of encoded data packets. In alternative implementations, each media stream portion 153 includes a variable number of data packet(s) of the continuous sequence of encoded data packets.

In some implementations, the duration, length, or size (e.g., number of data packet(s)) of each media stream portion 153 can be variable. For example, the duration of each media stream portion can correspond to a sentence, a phrase, or a particular language. In some implementations, the audio data selection module 151 can determine the media stream portions 153, according to a particular criterion. In some implementations, a size of the media stream portion 153 is based on data in the media stream 152, such as audio data (represented as original audio portion(s) 154). The size or duration of the original audio portion 154 may correspond to a detected word, phrase, sentence, speaking duration, and/or detected spoken language. For example, the translation engine 150 can identify the spoken language of the media stream 152, and can identify a point during the media stream 152 at which the spoken language changes from one language to another. The audio data selection module 151 can determine to generate media stream portions each corresponding to a particular spoken language.

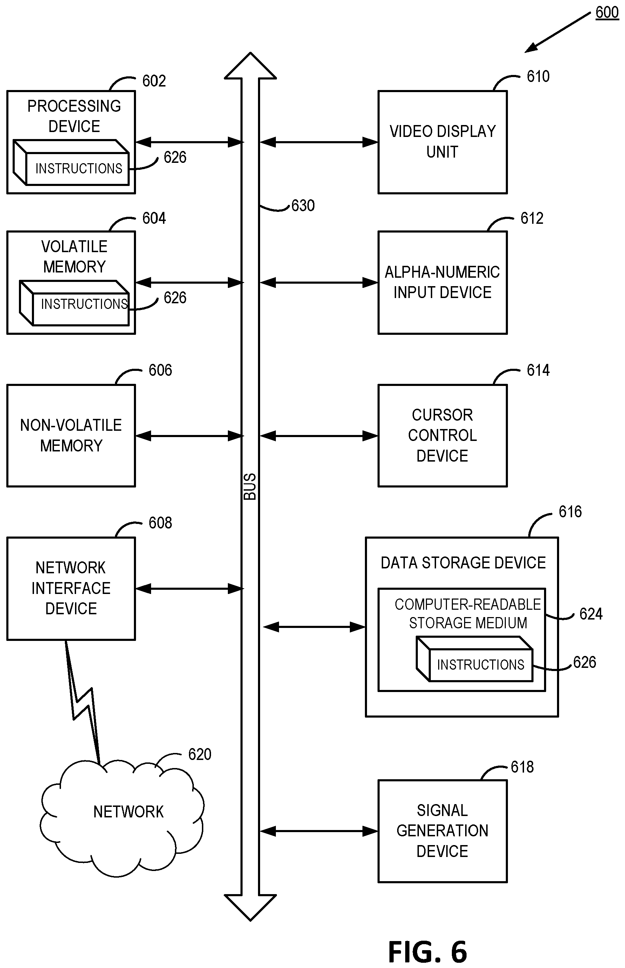

In some implementations, the audio data selection module 151 (or another component of translation engine 150) can identify the spoken language of the media stream 152 (or a subset thereof) using artificial intelligence. In some implementations, the audio data selection module 151 can include and/or interface with AI model(s) 141. In some implementations, the AI model(s) 141 can be trained to receive an audio input and provide, as output, an indication of the language of the audio input. In some implementations, the audio data selection module 151 can provide the audio from at least a subset of media stream 152 as input to AI model(s) 141, and the audio data selection module 151 can receive, as output from AI model(s) 141, an indication of the spoken language of the audio from at least a subset of media stream 152. In some implementations, the AI model(s) 141 can provide, as output, multiple indications of an identified spoken language. Each indication of an identified spoken language can have a corresponding confidence level representing a probability or degree of certainty that the predicted result (e.g., identified spoken language) is accurate based on the model's learned parameters and input data. In some implementations, the AI model(s) 141 can identify a point in the audio provided as input at which the identified spoken language changes from one language to another. The audio data selection module 151 can generate media stream portion(s) 153 using the identified point in the audio at which the language changes from one language to another. For example, a first media stream portion 153 can include the subset of the media stream that is in the first language, and a second media stream portion 153 can include the subset the media stream that is in the second language. The AI model(s) 141 are further described below, and with respect to **FIGs. 6A-6B.** The audio data selection module 151 can store the identified spoken language(s), and optionally the corresponding confidence level(s), in data store 106.

In some implementations, the translation engine 150 can separate the original audio portion 154 from the corresponding media stream portion 153. In some implementations, the audio data selection module 151 of the translation engine 150 can separate the original audio portion 154 from the corresponding media stream portion 153, e.g., according to a size, duration, and/or language of the original audio portion 154, as determined by the audio data context module 151.

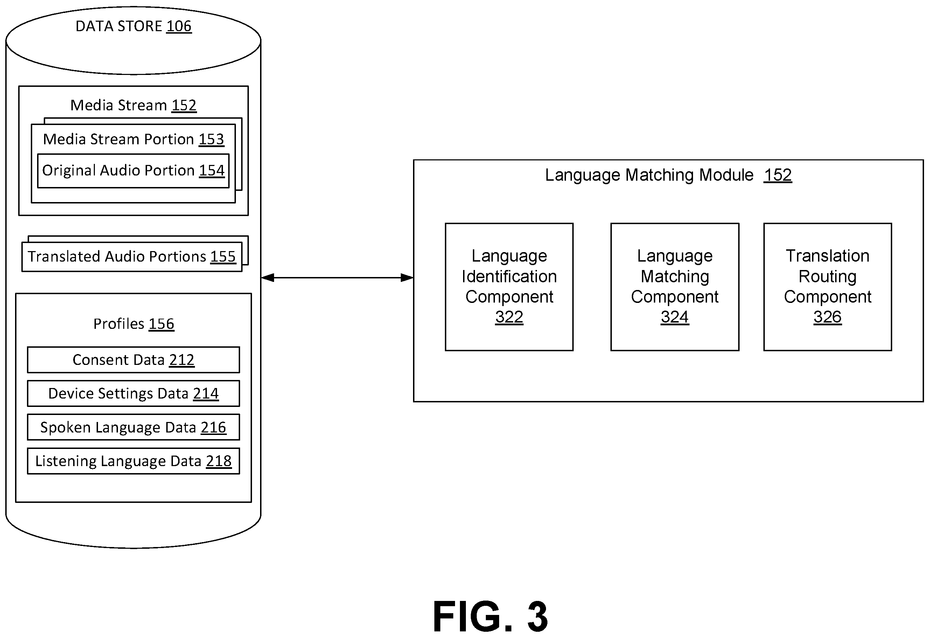

In some implementations, the language matching module 152 can identify the collective language preferences of the active participants of the virtual meeting 122, and can dynamically match the language preferences of the active participants. The language matching module 152 can access profiles 156 and identify the language preferences of the active participants of the virtual meeting 122. The language matching module 152 can also identify the spoken language of the original audio portion 154. In some implementations, the language matching module 152 (or another component of the translation engine 150) can identify the language using an AI model, e.g., AI model(s) 141. In some implementations, the language matching module 152 can identify the identified spoken language stored in data store 106. The language matching module 152 can compare the languages preferences of the active participants to the identified spoken language of the original audio portion 154 to determine whether to translate the original audio portion 154, into which language(s) to translate the original audio portion 154 into translated audio portions 155, and how to route the translated audio portions 155. The language matching module 152 is further described with respect to **FIG. 3****.**

In some implementations, the translation engine 150 can cause the original audio portions 154 to be translated into one or multiple different languages simultaneously. The language matching module 152 can determine the language(s) to translate the original audio portion 154, and the translation engine 150 can cause the original audio portion 154 to be translated into those language(s) simultaneously. The translation engine 150 can provide original audio portions 154 to the translator 156. The translator 156 can generate translated audio portions 155 of the original audio portions 154 in multiple languages simultaneously. In some implementations, the translator 156 can include and/or interface with AI model(s) 141. In some implementations, the AI model(s) 141 is trained to receive an audio input in an original language and generate an audio output in a translated language (e.g., target language). In some implementations, the AI model(s) 141 is trained to generate translated audio data (e.g., speech data in a translated language) directly from original audio data (e.g., speech data in an original language) without any speech-to-text based intermediary steps. In some implementations, the AI model 141 is trained to translate one or multiple original languages into multiple translated languages. For example, the AI model 141 can be trained to translate speech in English into speech in Spanish, speech in Russian into speech in French, or speech in Spanish into speech in Italian, French, and English, etc. In some implementations, multiple AI models 141 are trained for each language pairing. For example, a first AI model 141 can be trained to translate speech in English into speech in Spanish (and vice versa), and a second AI model 141 can be trained to translate speech in Russian into speech in French (and vice versa). The AI model(s) 141 are further described below, and with respect to **FIGs. 6A-6B.** The translated audio portions generated by AI model(s) 141 can be stored as translated audio portions 155 in data store 106.

In some implementations, the audio replacement module 157 can cause the original audio portion 154 of the media stream 152 to be replaced with the corresponding translated audio portion 155. In some implementations, the audio replacement module 157 can replace the original audio packets of the media stream 152 with translated audio packets corresponding to the generated translated audio in the different language. Thus, the audio replacement module 157 can identify the language routing determined by language matching module 152, and can replace the original audio portion 154 with the corresponding translated audio portions 155 provided to a respective user of user device 102A-102N, 104, during a virtual meeting 122. In some implementations, the audio replacement module 157 can notify (e.g., send a command to) UI manager 164 indicating which translation audio portion 155 (or original audio portion 154) to provide a client device 102A-102N, 104, during the virtual meeting 122. In some implementations, the translation engine 150 can provide the media stream 152 with the translated audio portions 155 to a respective client device 102A-102N, 104, during the virtual meeting.

In some implementations, the audio replacement module 157 can cause a corresponding translated audio portion 155 to be added to the media stream 152, e.g., without replacing the original audio stream 154. For example, the audio replacement module 157 can cause both the translated audio portion 155 and the original audio portion 154 to be included in the media stream 152, and the translation engine 150 can provide the media stream 152 with the translated audio portion 155 in addition to the original audio portion 152 to a respective client device 102A-102N, 104, during the virtual meeting. In some implementations, the translation engine 150 can cause playback of the translated audio portion 155 to overlay playback of the original audio portion 154. Translation engine 150 can cause playback of the original audio portion 154 can to be at a lower volume than playback of the translated audio portion 155, or cause playback of the original audio portion 154 to be muted during playback of the translated audio portion 155.

Client devices 102A-102N can each include computing devices such as personal computers (PCs), laptops, mobile phones, smart phones, tablet computers, netbook computers, wearable devices (e.g., smart watch, smart glasses, etc.), network-connected televisions, smart appliances (e.g., video doorbell), any type of mobile device, etc. In some implementations, client devices 102A-102N can be one or more computing devices (such as a rackmount server, a router computer, a server computer, a personal computer, a mainframe computer, a laptop computer, a tablet computer, a desktop computer, etc.), data stores (e.g., hard disks, memories, databases), networks, software components, or hardware components. In some implementations, client devices 102A-102N can also be referred to as "user devices." Each client device 102A-102N can include an audiovisual component that can generate audio and video data to be streamed to virtual meeting platform 120. In some implementations, the audiovisual component can include a device (e.g., a microphone) to capture an audio signal representing speech of a user and generate audio data (e.g., an audio file or audio stream) based on the captured audio signal. The audiovisual component can include another device (e.g., a speaker) to output audio data to a user (e.g., a participant of the virtual meeting 122) associated with a particular client device 102A-102N, 104. In some implementations, the audiovisual component can also include an image capture device (e.g., a camera) to capture images and generate video and/or audio data (e.g., a media stream 152) of the captured data of the captured images.

In some implementations, the client devices 102A-102N can implement or include one or more applications to communicate (e.g., send and receive information) with the virtual meeting platform 120. In some implementations, the client devices 102A-102N can implement a user interface (UI) (e.g., graphical user interfaces (GUIs)), such as a UI 124A-124N) that may be webpages rendered by a web browser and displayed on the client devices 102A-102N in a web browser window. In another implementation, the UI 124A-124N of the client devices 102A-102N may be included in a stand-alone application downloaded to the client devices 102A-102N and natively running on the client devices 102A-102N (also referred to as a "native application" or "native client application" herein). In some implementations, some or all portions of the translation engine 150 can be implemented at the client device 102A-102N.

In some implementations, virtual meeting platform 120 is coupled, via network 108, with one or more client devices 104 that are each associated with a physical conference or meeting room. Client device(s) 104 can include or be coupled to a media system 110 that can include one or more display devices 111, one or more speaker(s) 112, and/or one or more camera(s) 113. Display device 111 can be, for example, a smart display or a non-smart display (e.g., a display that is not itself configured to connect to network 108). Users that are physically present in the room can use media system 110 rather than their own devices (e.g., client devices 102A-102N) to participate in a virtual meeting 122, which can include other remote users. For example, the users in the room that participate in the virtual meeting 122 can control the display 111 to show a slide presentation or watch slide presentations of other participants. Sound and/or camera control can similarly be performed. Similar to client devices 102A-102N, client device(s) 104 can generate audio and video data to be streamed to virtual meeting platform 120 (e.g., using one or more microphones, speaker(s) 112, and camera(s) 113).

Each client device 102A-102N and/or 104 can include a browser and/or a client application (e.g., a mobile application, a desktop application, etc.). In some implementations, the web browser and/or the client application can present, e.g., on a display device 103-103N of client device 102A-102N, a user interface (UI) (e.g., a UI of the UIs 124A-124N) for users to access virtual meeting platform 120. For example, a user of client device 102A can join and participate in a virtual meeting 122 via a UI 124A presented on the display device 103A by client application or web browser. A user can also present a document to participants of the virtual meeting 122 via each of the UIs 124A-124N. Each of the UIs 124A-124N can include multiple regions to present visual items corresponding to media streams (e.g., media streams 152) of the client devices 102A-102N provided to the server 130 for the virtual meeting 122. In some implementations, each of the UIs 124A-124N can include various visual elements (e.g., UI features) and regions, and can be a mechanism by which the user engages with the virtual meeting platform 120, and system 100 at large. For example, the UI features can correspond to notifications and/or tools provided by the virtual meeting platform 120. Each UI 108A-108N can display the UI features as instructed by UI manager 164. In some implementations, the UIs 124A-124N of the client devices 102A-102N can include multiple visual elements and regions that enable presentation of information, for decision-making, content delivery, etc., at the client devices 102A-102N. In some implementations, the UIs 124A-124N may sometimes be referred to as a graphical user interface (GUI)).

In some implementations, the UIs 124A-124N of client devices 102A-102N can include input features to intake information from client devices 102A-102N. In one or more examples, a user of client devices 102A-102N can provide input data (e.g., a user query, control commands, etc.) into an input feature of the UIs 124A-124N or client devices 102A-102N, for transmission to the virtual meeting platform 120, and system 100 at large. Input features of UIs 124A-124N and/or client devices 102A-102N can include space, regions, and/or elements of the UIs 124A-124N that accept user inputs. For example, input features may include visual elements (e.g., GUI elements) such as buttons, text-entry spaces, selection lists, drop-down lists, etc. For example, in some implementations, input features may include a chat box which a user of client devices 102A-102N can use to input textual data (e.g., a user query). As an illustrative example, input features can include an indication to consent to the speech-to-speech translation feature of the virtual meeting platform 120, and/or to indicate language preferences of the user. The client devices 102A-102N can then transmit that input data to virtual meeting platform 120, and the system 100 at large, for further processing. In other examples, input features can include a selection list, in which a user of client devices 102A-102N can input selection data, e.g., by selecting, or clicking. The client devices 102A-102N can then transmit that selection data to virtual meeting platform 120, and the system 100 at large, for further processing.

In some implementations, server 130 can include a virtual meeting manager 132. Virtual meeting manager 132 can be configured to manage a virtual meeting 122 between multiple users of virtual meeting platform 120. In some implementations, virtual meeting manager 132 can provide the UIs 124A-124N to each client device to enable users to watch and listen to each other during a virtual meeting 122. Virtual meeting manager 132 can also collect and provide data associated with the virtual meeting 122 to each participant of the virtual meeting 122. In some implementations, virtual meeting manager 132 can provide the UIs 124A-124N for presentation by client application (e.g., mobile application, desktop application, etc.). For example, the UIs 124A-124N can be displayed on a display device 103A-103N by a native client application executing on the operating system of the client device 102A-102N or client device(s) 104. In some implementations, the virtual meeting manager 132 can determine visual items and/or visual indicators for presentation in the UI 124A-124N during a virtual meeting 122. A visual item can refer to a UI element that occupies a particular region in the UI and is dedicated to presenting a media stream 152 from a respective client device 102A-102N, 104. Such a media stream can depict, for example, a user of the respective client device while the user is participating in the virtual meeting (e.g., speaking, presenting, listening to other participants, watching other participants, etc., at particular moments during the virtual meeting), a physical conference or meeting room (e.g., with one or more participants present), a document or media content (e.g., video content, one or more images, etc.) being presented during the virtual meeting, a transcript of the audio (e.g., original audio portion 154 and/or translated audio portion 154), etc. It is appreciated that providing media streams 152 for presentation is described herein by way of example, and not limitations, noting that aspects and implementations of the present disclosure can be applied to other visual items (e.g., recorded videos) without deviating from the scope of the present disclosure. In some implementations, the virtual meeting manager 132 can determine UI features for presentation in the UI 108A-108N during a virtual meeting. A UI feature can refer to a UI element that occupies a particular region in the UI and is dedicated to presenting a particular notification (e.g., using a visual indicator) to a user of the respective client device 102A-102N.

In some implementations, the virtual meeting manager 132 can include a media stream processor 163, a user interface (UI) manager 164, and/or a connection manager 165. The components can be combined together or separated into further components, according to a particular implementation. It should be noted that in some implementations, various components of the virtual meeting manager 132 can run on separate machines.

In some implementations, the media stream processor 163 can receive video feeds (e.g., the video stream pertaining to one or more participants of a virtual meeting) and/or audio feeds (e.g., from an audiovisual component of the client device) from the client devices 102A-102N and/or 104. The media stream processor 163 can process the audio and/or video, in order to convert the raw audio and/or video feeds received from a client device into a form that can be interpreted by an AI model. In some implementations, the media stream processor 163 can receive raw audio signals and can perform feature extraction to generate audio data that can be interpreted by an AI model. For example, the audio signal can be converted from the time domain into the frequency domain, to create a spectrogram that represents how the energy of the signal is distributed over different frequencies across time. The resulting data can be a spectrogram image, or its numerical array representation, for example. Other feature extraction methods may be used.

In some implementations, the media stream processor 163 can receive a video feed from a client device 102A-102N, 104, and can process the video feed to convert the video feed into a form that can be interpreted by an AI model. For example, the media stream processor 163 can perform frame extraction and optical flow analysis. Media stream processor 163 can break down the video into individual frames (e.g., according to the frame rate of the video feed). The optical flow analysis can capture motion between frames by analyzing pixel displacement, resulting in an optical flow vector.

In some implementations, the media stream processor 163 can receive media streams 152 from client devices 102A-102N and/or client device(s) 104. The media stream processor 163 can determine media streams 152 for presentation in the UIs 124A-124N during the virtual meeting 122. Each media stream 152 can correspond to a media stream from a client device (e.g., the media stream 152 pertaining to one or more participants of the virtual meeting 122). In some implementations, the media stream processor 163 can receive audio streams associated with the media streams 152 from the client devices (e.g., from an audiovisual component of the client devices 102A-102N).

A participant can join and participate in a virtual meeting 122 via a UI 124A presented on the display device 103A by the web browser or client application. As described previously, an audiovisual component of each client device can capture images and generate video data (e.g., a media stream 152) of the captured data of the captured images. In some implementations, the client devices 102A-102N and/or client device(s) 104 can transmit the generated media stream 152 to virtual meeting manager 132. The audiovisual component of each client device can also capture an audio signal representing speech of a user and generate audio data (e.g., an audio file or audio stream) based on the captured audio signal. In some implementations, the client devices 102A-102N and/or client device(s) 104 can transmit the generated audio data to virtual meeting manager 132.

The UI manager 164 can provide a UI for a virtual meeting 122. The UI can include multiple regions. Each region can display a media stream 152 pertaining to one or more participants of the virtual meeting 122. The UI manager 164 can control which media stream 152 is to be displayed by providing a command to the client devices that indicates which media stream 152 is to be displayed in which region of the UI (along with the video and audio streams being provided to the client devices). For example, in response to being notified of the determined media streams 152 and/or translation audio portions 155 for presentation in the UI 124A-124N, the UI manager 164 can transmit a command causing each determined media stream 152 to be displayed in a region of the UI and/or rearranged in the UI.

The connection manager 165 can manage connections of the client devices 102A-102N, 104 to the virtual meeting 122 of the virtual meeting platform 120. In some implementations, the connection manager 165 enables a client device 102A-102N, 104 to establish a network connection to the virtual meeting platform 120. In some implementations, the connection manager 165 can monitor a connection health between a client device 102A-102N, 104 and the virtual meeting platform 120. Connection health may depend on one or more of connection latency, packet loss, packet jitter, or the like. In some implementations, the connection manager 165 can adjust connection parameters, such as a bitrate, resolution, or the like in response to a monitored connection health. For example, if the connection health is poor (e.g., there are a large number of dropped packets, high latency, etc.), the connection manager 165 may reduce a bitrate, resolution, or the like of media streams 152 transmitted to the device 102A-102N, 104. In another example, if the connection health is satisfactory, (e.g., there are a minimal number of dropped packets, low latency, etc.), the connection manager 165 may increase a bitrate, resolution, or the like of media streams 152 transmitted to the device 102A-102N, 104. In some implementations, the connection manager 165 may attempt to reestablish a connection with a device 102A-102N, 104 in the event of an unintended disconnection. In some implementations, the connection manager 165 may attempt to route the delivery of the media stream 152 to the device 102A-102N, 104 through alternative network paths based on the determined connection health.

In some implementations, a client device 102A can access the virtual meeting platform 120 through network 108 using one or more application programming interface (API) calls via platform API endpoint 129. In some implementations, virtual meeting platform 120 can include multiple platform API endpoints 129 that can expose services, functionality, or information of the virtual meeting platform 120 to one or more client devices 102A-102N. In some implementations, a platform API endpoint 129 can be one end of a communication channel, where the other end can be another system, such as a client device 102A associated with a participant or user account. In some implementations, the platform API endpoint 129 can include or be accessed using a resource locator, such a universal resource identifier (URI), universal resource locator (URL), of a server or service. The platform API endpoint 129 can receive requests from other systems, and in some cases, return a response with information responsive to the request. In some implementations, HTTP (Hypertext Transfer Protocol), HTTPS (Hypertext Transfer Protocol Secure) methods (e.g., API calls) can be used to communicate to and from the platform API endpoint 129.

In some implementations, the platform API endpoint 129 can function as a computer interface through which access requests are received and/or created. In some implementations, the platform API endpoint 129 can include a platform API whereby external entities or systems can request access to services and/or information provided by the virtual meeting platform 120. The platform API can be used to programmatically obtain services and/or information associated with a request for services and/or information.

In some implementations, the API of the platform API endpoint 129 can be any suitable type of API such as a REST (Representational State Transfer) API, a GraphQL API, a SOAP (Simple Object Access Protocol) API, and/or any suitable type of API. In some implementations, the virtual meeting platform 120 can expose through the API, a set of API resources which when addressed can be used for requesting different actions, inspecting state or data, and/or otherwise interacting with the virtual meeting platform 120. In some implementations, a REST API and/or another type of API can work according to an application layer request and response model. An application layer request and response model can use HTTP, HTTPS, SPDY, or any suitable application layer protocol. Herein HTTP-based protocol is described for purposes of illustration, rather than limitation. The disclosure should not be interpreted as being limited to the HTTP protocol. HTTP requests (or any suitable request communication) to the virtual meeting platform 120 can observe the principals of a RESTful design or the protocol of the type of API. RESTful is understood in this document to describe a Representational State Transfer architecture. The RESTful HTTP requests can be stateless, thus each message communicated contains all necessary information for processing the request and generating a response. The platform API can include various resources, which act as endpoints that can specify requested information or requesting particular actions. The resources can be expressed as URI's or resource paths. The RESTful API resources can additionally be responsive to different types of HTTP methods such as GET, PUT, POST and/or DELETE.

It can be appreciated that in some implementations, any element, such as server 130, server 140, and/or data store 106 may include a corresponding API endpoint for communicating with APIs.

The system 100 can include one or multiple artificial intelligence (AI) model(s), e.g., AI model(s) 141. AI model(s) can also be referred to as a "machine learning (ML) model" herein. An AI model can include a discriminative machine learning model (also referred to as "discriminative AI model" herein), a generative machine learning model (also referred to as "generative AI model" herein), and/or other AI or ML model(s).

In some implementations, a discriminative AI model can model a conditional probability of an output for given input(s). A discriminative AI model can learn the boundaries between different classes of data to make predictions on new data. In some implementations, a discriminative AI model can include a classification model that is designed for classification tasks, such as learning decision boundaries between different classes of data and classifying input data into a particular classification. Examples of discriminative AI models include, but are not limited to, support vector machines (SVM) and neural networks.

In some implementations, a generative AI model learns how the input training data is generated and can generate new data (e.g., original data). A generative AI model can model the probability distribution (e.g., joint probability distribution) of a dataset and generate new samples that often resemble the training data. Generative AI models can be used for tasks involving image generation, text generation and/or data synthesis. Generative AI models include, but are not limited to, gaussian mixture models (GMMs), variational autoencoders (VAEs), generative adversarial networks (GANs), large language models (LLMs), vision-language models (VLMs), multi-modal models (e.g., text, images, video, audio, depth, physiological signals, etc.), and so forth.

In some implementations, a first AI model 141 of AI models 141 may be trained to identify a language of media and/or audio. For example, the first AI model 141 may be trained to identify multiple languages of media and/or audio provided as input, and may provide a corresponding confidence level for each identified language. In some implementations, the first AI model 141 may be trained to identify a first portion of the media and/or audio that is in a first language, and a second portion of the media and/or audio that is in a second language. For example, the first AI model 141 may be trained to provide an indication of where in the media and/or audio the language changes from the first language to the second language). The indication of where the language changes may be a timestamp, for example. The first AI model 141 can be a model that is trained on data generated by a training set generator. The training set generator may be capable of generating training data (e.g., a set of training inputs and a set of target outputs) to train the first AI model 141. In some implementations, the training set generator can generate the training data based on various data (e.g., stored at data store 106 or another data store connected to system 100 via the network 108 or via another network). The data store 106 can store metadata associated with the training data.

In some implementations, a second AI model 141 of AI models 141 may be trained to translate media in a first language into media in a second language. For example, the second AI model 141 may be trained to translate text data in a first language into text data in a second language. In another example, the second AI model 141 may be trained to translate audio or speech data in a first language into audio or speech data in a second language. The second AI model 141 can be a model that is trained on data generated by a training set generator. The training set generator may be capable of generating training data (e.g., a set of training inputs and a set of target outputs) to train the second AI model 141. In some implementations, the training set generator can generate the training data based on various data (e.g., stored at data store 106 or another data store connected to system 100 via the network 108). The data store 106 can store metadata associated with the training data.

In some implementations, one or more of the AI models 141 are trained on training sets by a training engine. Each AI model 141 (also referred to "machine learning model" or "artificial intelligence (AI) model" herein) may refer to the model artifact that is created by the training engine using the training data that includes training inputs (e.g., features) and corresponding target outputs (correct answers for respective training inputs) (e.g., labels). The training engine may find patterns in the training data that map the training input to the target output (the answer to be predicted) and provide each AI model 141 that captures these patterns. Each of the AI models 141 may be composed of, e.g., a single level of linear or non-linear operations (e.g., a support vector machine (SVM), or may be a deep network, i.e., a machine learning model that is composed of multiple levels of non-linear operations). An example of a deep network is a neural network with one or more hidden layers, and such a machine learning model may be trained by, for example, adjusting weights of a neural network in accordance with a backpropagation learning algorithm or the like. AI model 141 can use one or more of a support vector machine (SVM), Radial Basis Function (RBF), clustering, supervised machine learning, semi-supervised machine learning, unsupervised machine learning, k-nearest neighbor algorithm (k-NN), linear regression, random forest, neural network (e.g., artificial neural network), a boosted decision forest, etc. For convenience rather than limitation, the remainder of this disclosure describing a discriminative machine learning model will refer to the implementation as a neural network, even though some implementations might employ other types of learning machine instead of, or in addition to, a neural network.

In some implementations, such as with a supervised machine learning model, the one or more training inputs of the set of the training inputs are paired with respective one or more training outputs of the set of training outputs. The training input-output pair(s) can be used as input to the machine learning model to help train the machine learning model to determine, for example, patterns in the data.

In some implementations, one or more of the AI models 141 can be a generative AI model. A generative AI model is an AI model which can generate new, original data. An AI model 141 can include a generative adversarial network (GAN) and/or a variational autoencoder (VAE). In some instances, a GAN, a VAE, and/or other types of generative AI models can employ different approaches to training and/or learning the underlying probability distributions of training data, compared to some AI models.

For instance, a GAN can include a generator network and a discriminator network. The generator network attempts to produce synthetic data samples that are indistinguishable from real data, while the discriminator network seeks to correctly classify between real and fake samples. Through this iterative adversarial process, the generator network can gradually improve its ability to generate increasingly realistic and diverse data.

In some implementations, one or more of the AI models 141 can be a generative large language model (LLM). In some implementations, one or more of the AI models 141 can be a large language model that has been pre-trained on a large corpus of data so as to process, analyze, and generate human-like text based on given input.

In some implementations, one or more of the AI models 141 may have any architecture for LLMs, including one or more architectures as seen in Generative Pre-trained Transformer (GPT) series (Chat GPT series LLMs), Google's Gemini^{®}, or LaMDA, or leverage a combination of transformer architecture with pre-trained data to create coherent and contextually relevant text.

In some implementations, an AI model 141, such as an LLM, can use an encoder-decoder architecture including one or more self-attention mechanisms, and one or more feed-forward mechanisms. In some implementations, the AI model 141 can include an encoder that can encode input textual data into a vector space representation; and a decoder that can reconstruct the data from the vector space, generating outputs with increased novelty and uniqueness. The self-attention mechanism can compute the importance of phrases or words within a text data with respect to all of the text data. An AI model 141 can also utilize the previously discussed deep learning techniques, including recurrent neural networks (RNNs), convolutional neural networks (CNNs), or transformer networks.

In some implementations, one or more of the AI models 141 can be a multi-modal generative AI model, such as a Visual-Language Model (VLM). In some implementations, the AI model 141 can be a VLM that has been pre-trained on a large corpus of data (e.g., textual data and image data) so as to process, analyze, and generate human-like text and/or image data based on given input (e.g., image data and/or natural language text).

In some implementations, training a generative AI model can include providing training input to an AI model 141, and the AI model 141 can produce one or more training outputs. The one or more training inputs can be compared to one or more evaluation metrics. An evaluation metric can refer to a measure used to assess the output (e.g., training output(s)) of an AI model, such as an AI model 141. In some implementations, the evaluation metric can be specific to the task and/or goals of the AI model. Based on the comparison, one or more parameters and/or weights of the AI model 141 can be adjusted (e.g., backpropagation based on computed loss). In some implementations, and for example, the one or more training outputs can be compared to an evaluation metric such as a ground truth (e.g., target output, such as a correct or better answer). In some implementations and for example, the one or more training outputs can be evaluated/compared to an evaluation metric and can be rewarded (e.g., evaluated as a positive answer) or penalized (e.g., evaluated as a negative answer) based on the quality of the one or more training outputs (e.g., reinforcement learning).

In some implementations, a validation engine may be capable of validating an AI model 141 using a corresponding set of features of a validation set from the training set generator. In some implementations, the validation engine may determine an accuracy of each of the trained generative models, such as AI model 141 (e.g., accuracy of the training output) based on the corresponding sets of features of the validation set. The validation engine may discard a trained AI model 141 that has an accuracy that does not meet a threshold accuracy. In some implementations, a selection engine not shown) may be capable of selecting an AI model 141 that has an accuracy that meets a threshold accuracy. In some implementations, the selection engine may be capable of selecting the trained AI model 141 that has the highest accuracy of the trained generative models (e.g., AI model 141).

A testing engine may be capable of testing a trained AI model 141 using a corresponding set of features of a testing set from the training engine 141. For example, a first trained AI model 141 that was trained using a first set of features of the training set may be tested using the first set of features of the testing set. The testing engine may determine a trained AI model 141 that has the highest accuracy of all of the trained AI models based on the testing sets.

In some implementations, an AI model 141 can be trained on a corpus of data, such as textual data and/or image data. In some implementations, the AI model 141 can be a model that is first pre-trained on a corpus of text to create a foundational model (e.g., also referred to as "pre-trained model" herein), and afterwards adapted (e.g., fine-tuned or transfer learning) on more data pertaining to a particular set of tasks to create a more task-specific or targeted generative AI model (e.g., also referred as an "adapted model" herein.) The foundational model can first be pre-trained using a corpus of data (e.g., text and/or images) that can include text and/or image content in the public domain, licensed content, and/or proprietary content (e.g., proprietary organizational data). The AI model 141 can use pre-training to learn broad image elements and/or broad language elements including general sentence structure, common phrases, vocabulary, natural language structure, and any other elements commonly associated with natural language in a large corpus of text. In example, the pre-trained model can be fine-tuned to the specific task or domain that the AI model 141 is to be adapted. In some implementations, AI model 141 may include one or more pre-trained models or adapted models.

In some implementations, training data, such as training input and/or training output, and/or input data to a trained machine learning model (collectively referred to as "machine learning model data" herein) can be preprocessed before providing the aforementioned data to the (trained or untrained) machine learning model (e.g., discriminative machine learning model and/or generative machine learning model) for execution. Preprocessing as applied to machine learning models (e.g., discriminative machine learning model and/or generative machine learning model) can refer to the preparation and/or transformation of machine learning model data.

In some implementations, preprocessing can include data scaling. Data scaling can include a process of transforming numerical features in raw machine learning model data such that the preprocessed machine learning model data has a similar scale or range. For example, Min-Max scaling (Normalization) and/or Z-score normalization (Standardization) can be used to scale the raw machine learning model. For instance, if the raw machine learning model data includes a feature representing temperatures in Fahrenheit, the raw machine learning model data can be scaled to a range of [0, 1] using Min-Max scaling.

In some implementations, preprocessing can include data encoding. Encoding data can include a process of converting categorical or text data into a numerical format on which a machine learning model can efficiently execute. Categorical data (e.g., qualitative data) can refer to a type of data that represents categories and can be used to group items or observations into distinct, non-numeric classes or levels. Categorical data can describe qualities or characteristics that can be divided into distinct categories, but often does not have a natural numerical meaning. For example, colors such as red, green, and blue can be considered categorical data (e.g., nominal categorical data with no inherent ranking). In another example, "small," "medium," and "large" can be considered categorical data (ordinal categorical data with an inherent ranking or order). An example of encoding can include encoding a size feature with categories ["small," "medium," "large"] by assigning 0 to "small," 1 to "medium," and 2 to "large."

In some implementations, preprocessing can include data embedding. Data embedding can include an operation of representing original data in a different space, often of reduced dimensionality (e.g., dimensionality reduction), while preserving relevant information and patterns of the original data (e.g., lower-dimensional representation of higher-dimensional data). The data embedding operation can transform the original data so that the embedding data retains relevant characteristics of the original data and is more amenable for analysis and processing by machine learning models. In some implementations embedding data can represent original data (e.g., word, phrase, document, or entity) as a vector in vector space, such as continuous vector space. Each element (e.g., dimension) of the vector can correspond to a feature or property of the original data (e.g., object). In some implementations, the size of the embedding vector (e.g., embedding dimension) can be adjusted during model training. In some implementations, the embedding dimension can be fixed to help facilitate analysis and processing of data by machine learning models.

In some implementations, the translation engine 150 provides an input to a first AI model of the AI models 141. The first AI model provides an indication of the language of the input, which is obtained by translation engine 150. In some implementations, the translation engine 150 provides an input to a second AI model of the AI models 141. The second AI model generates an output, which is obtained by the translation engine 150. In some implementations, the server 140 includes the translation engine 150 that provides an input (e.g., media stream, audio stream, media portion, audio portion, text data, language preferences, language identification, etc.) as input to the trained model (e.g., AI models 141) and runs the trained model on the input to provide and/or generate one or more outputs.

In some implementations, confidence data can include or indicate a level of confidence that a particular output (e.g., output(s)) corresponds to one or more inputs of the machine learning model (e.g., trained machine learning model). In one example, the level of confidence is a real number between 0 and 1 inclusive, where 0 indicates no confidence that output(s) corresponds to a particular one or more inputs and 1 indicates absolute confidence that the output(s) corresponds to a particular one or more inputs. In some implementations, confidence data can be associated with inference using a machine learning model.

In some implementations, a machine learning model, such as AI models 141, may be (or may correspond to) one or more computer programs executed by processor(s) of server 140 and/or server 130. In other implementations, a machine learning model may be (or may correspond to) one or more computer programs executed across a number or combination of servers. For example, in some implementations, machine learning models may be hosted on the cloud, while in other implementations, these machine learning models may be hosted and perform operations using the hardware of a client device 102A-102N. In some implementations, the machine learning models may be a self-hosted machine learning model, while in other implementations, machine learning models may be external machine learning models accessed by an API.

In some implementations, virtual meeting platform 120, server 130, and/or server 140 can be one or more computing devices computing devices (such as a rackmount server, a router computer, a server computer, a personal computer, a mainframe computer, a laptop computer, a tablet computer, a desktop computer, etc.), data stores (e.g., hard disks, memories, databases), networks, software components, and/or hardware components that can be used to enable a user to connect with other users via a virtual meeting 122. Virtual meeting platform 120 can also include a website (e.g., a webpage) or application back-end software that can be used to enable a user to connect with other users via the virtual meeting 122.

It should be noted that in some other implementations, the functions of server 130, server 140, and/or virtual meeting platform 120 can be provided by a fewer number of machines. For example, in some implementations, server 130 and/or server 140 can be integrated into a single machine, while in other implementations, server 130 and/or server 140 can be integrated into multiple machines. In addition, in some implementations, server 130 and/or server 140 can be integrated into virtual meeting platform 120.

In general, functions described in implementations as being performed by virtual meeting platform 120, server 130, and/or server 140 can also be performed by the client devices 102A-N and/or client device(s) 104 in other implementations, if appropriate. In addition, the functionality attributed to a particular component can be performed by different or multiple components operating together. Virtual meeting platform 120, server 130, and/or server 140 can also be accessed as a service provided to other systems or devices through appropriate application programming interfaces, and thus is not limited to use in websites.

Although implementations of the disclosure are discussed in terms of virtual meeting platform 120 and users of virtual meeting platform 120 participating in a virtual meeting 122, implementations can also be generally applied to any type of telephone call, conference call, or virtual meeting between users. Implementations of the disclosure are not limited to virtual meeting platforms that provide virtual meeting tools to users.

In implementations of the disclosure, a "user" or "participant" can be represented as a single individual. However, other implementations of the disclosure encompass a "user" or "participant" being an entity controlled by a set of users and/or an automated source such as a system or platform. For example, a set of individual users federated as a community in a social network can be considered a "user." In another example, an automated consumer can be an automated ingestion pipeline, such as a topic channel, of the virtual meeting platform 120.

In situations in which the systems discussed here collect personal information about users, or can make use of personal information, the users can be provided with an opportunity to control whether virtual meeting platform 120 collects user information (e.g., information about a user's social network, social actions or activities, profession, a user's preferences, or a user's current location), or to control whether and/or how to receive content from the server 130, 140 that can be more relevant to the user. In addition, certain data can be treated in one or more ways before it is stored or used, so that personally identifiable information is removed. For example, a user's identity can be treated so that no personally identifiable information can be determined for the user, or a user's geographic location can be generalized where location information is obtained (such as to a city, ZIP code, or state level), so that a particular location of a user cannot be determined. Thus, the user can have control over how information is collected about the user and used by the virtual meeting platform 120, server 130, and/or server 140.

Implementations described herein may involve the collection of data describing a user and/or activities of a user. To address the privacy of users, various techniques may be implemented. In one implementation, the collection of such data occurs only after the user provides consent. In some implementations, a user may be presented with a prompt to explicitly allow the collection of this data. In the instance where the user consents to the use of such data, the data may be used for the described functionalities.

Prior to the system enabling collection of user information (e.g., media stream 152, audio data, language preferences, consent to enable the speech-to-speech translation feature, etc.), a user may be provided with controls allowing the user to make an election as to both if and when the system may enable such collection. For in-room participants, clear and conspicuous information regarding the data collection may be provided before their participation.

In some implementations, users may be informed of the security measures in place to protect collected data, such as encryption prior to being stored. Information regarding how long the collected data may be retained and the procedures for their removal may also be provided. Users may be informed of their options regarding their biometric data. Contact information for privacy-related questions may be made available. Methods of providing such information may include in-room displays or a companion application for in-room participants, and the platform user interface for remote participants.

In some implementations, the system 100 may obtain an affirmative indication from in-room participants prior to collecting user data. Participants may be informed of their ability to withdraw their consent and may be provided with mechanisms to do so, such as disabling data collection devices (e.g., cameras, microphones, etc.) or using a user interface control. The consequences of withdrawing consent may be clearly communicated.

Data describing user speech data may be treated in one or more ways before it is stored or used, so that personally identifiable information is removed. For example, a user's identity may be treated so that no personally identifiable information can be determined for the user. Access to stored user speech and/or audio data may be controlled to limit which components and personnel can access it.

The system may be designed to align with privacy considerations. Where technically viable, processing collected user data may occur locally on the client device to reduce server-side processing. Measures to reduce the risk of unintentionally capturing and processing personal and/or biometric data of individuals not participating in the meeting may be implemented. Privacy considerations may be addressed in the design of application programming interfaces (APIs), such as not retaining detailed data in logs and enforcing strong security for data retrieval. A description of the retention periods and data removal procedures for all collected and processed data related to this system may be documented.

Workspace administrators may be provided with controls to manage implementations within their domain, including the ability to enable or disable it for specific units or users and potentially remove enrollment data.

**FIG. 2** is a block diagram illustrating an example enrollment system 200, in accordance with at least one embodiment of the present disclosure. The enrollment system 200 can include an enrollment module 123 and one or more data store(s) 106. The enrollment module 123 can access the data store 106, e.g., via a network 108 of **FIG. 1****.** The enrollment module 123 can be a software program hosted by a device (e.g., platform 120, server device 130, 140, client device 102A-102N, 104) to enable a user to enroll in the native speech-to-speech audio translation feature provided by platform 120. The enrollment module 123 and/or the data store 106 can be the same as, or perform the same functions as, enrollment module 123 and data store 106 of **FIG. 1****,** respectively.

The enrollment module 123 can include a consent component 222 and/or a language preference setup component 224. Each of the consent component 222 and/or the language preference setup component 224 can include a software application (or a subset thereof) that performs a certain functionality for the enrollment module 123. The consent component 222 and/or the language preference setup component 224 can be combined together or separated into further components, according to a particular implementation. It should be noted that in some implementations, various components of the enrollment module 123 can run on separate machines. In embodiments, each of the components can be or include logic configured to perform a particular action or set of actions. In embodiments, one or more of the components can be combined into a single component. In embodiments, the functions of one or more components can be divided into sub-components.

In some implementations, data store 106 can store profile data 156, which can include consent data 212, device settings data 214, spoken language data 216, and/or listening language data 218. In some implementations, consent data 212, device settings data 214, spoken language data 216, and/or listening language data 218 can each store a separate data structure associated with a respective virtual meeting (e.g., virtual meeting 122 of **FIG. 1**). In some implementations, consent data 212, device settings data 214, spoken language data 216, and/or listening language data 218 can be populated with participant identifiers of the participants of the corresponding virtual meeting (e.g., virtual meeting 122), optionally including device identifiers (e.g., corresponding to devices 102A-102N, and/or 104). In some implementations, consent data 212, device settings data 214, spoken language data 216, and/or listening language data 218 can be stored on a server, such as server 130, 140, and processed by enrollment module 123. In some implementations, consent data 212, device settings data 214, spoken language data 216, and/or listening language data 218 can be stored on one or more associated client devices 102A-N, 104. It is appreciated that the functionality of consent data 212, device settings data 214, spoken language data 216, and/or listening language data 218 can be implemented using a variety of data structures. For example, consent data 212, device settings data 214, spoken language data 216, and/or listening language data 218 can be implemented as a list, an array, a vector, a set, a linked list, a stack, a queue, a buffer, a tree, a graph, and the like.

Consent data 212 data can include an indication of whether the user of a respective client device (e.g., client device 102A-102N of **FIG. 1**) has provided consent to enable the speech-to-speech audio translation feature of the platform 120. That is, consent data 212 can store a consent indicator corresponding to a particular user identifier (e.g., a username of a user of platform 120). As an illustrative example, consent data 212 can reflect a "consent" or "no consent" status for a particular user identifier.

Device settings data 214 can refer to settings that the user of a particular client device (e.g., client device 102A-102N of **FIG. 1**) has previously established. Additionally or alternatively, device settings data 214 can refer to settings that a particular component of the client device has determined based on user history, geographical location of the client device, and so on. Device settings can include, for example, a preferred language of the operating system operating on the client device, a language setting for applications running on the client device, a language setting for listening to audio played on the client device, a language setting for watching videos played on the client device, a language used for performing online searches on the client device, the official language of the country of the country in which the client device is most often located, and so on. Spoken language data 216 can include an indication of each language that the user of the respective client device (e.g., client device 102A-102N) speaks. Listening language data 218 can include an indication of each language that the user of the respective client device (e.g., client device 102A-102N) understands.

The consent component 222 can be configured to request and/or receive consent from a user of a respective client device (e.g., client device 102A-102N) to enable the speech-to-speech translation feature of the platform 120. The consent component 222 can be configured to identify whether a user of a respective client device has previously provided consent to enable the speech-to-speech translation feature of the platform 120, using consent data 212. As an illustrative example, during a virtual meeting (e.g., virtual meeting 122) consent component 222 can identify a user identifier of a participant participating in the virtual meeting 122, and can determine, by accessing consent data 212, whether the participant has previously provided consent to enable the speech-to-speech translation feature of the platform 120. If so, the enrollment module 123 can proceed to implement the language preference setup component 224. If not, the enrollment module 123 can provide a request for consent to the corresponding user device 102A-N.

In some implementations, enrollment module 123 can cause a request for consent to be displayed on a UI of the respective client device (e.g., UI 124A-124A of client device 102A-102N). The enrollment module 123 can cause provide the request for consent when a user joins a virtual meeting (e.g., virtual meeting 122), when a user first accesses the platform 120, when a user creates a profile with the virtual platform 120, upon a user request to enable the speech-to-speech translation feature of the platform 120, and/or at another appropriate time. Once the user provides consent to enable the speech-to-speech translation feature, the enrollment module 123 can update the consent data 212 for the respective user. The user of a client device 102A-102N can change their consent status at any time.

In some implementations, consent component 222 can determine whether a respective client device and/or user profile is restricted from participating in the speech-to-speech translation feature. For example, certain geographical jurisdictions may prohibit speech-to-speech translation during a virtual meeting. In some implementations, consent component 222 can identify the geographical location of the corresponding client device (e.g., by accessing device settings data 214) to determine whether the respective client device is located in a geographical location that restricts speech-to-speech translation during a virtual meeting. If so, the consent component 222 can set the consent data 212 to "no consent." As another example, some jurisdictions may restrict the age of a user for which speech-to-speech translation may be used during a virtual meeting. Consent component 222 can access profile data 156 to determine whether the user (associated with a user identifier participating in the virtual meeting) satisfies the age restriction. If the user does not satisfy the age restriction, the consent component 222 can set the consent data 212 to "no consent." Additionally or alternatively, in either or both scenarios, the consent component 222 can disable the speech-to-speech translation feature for the corresponding client device until the geographical location and/or age of the user satisfies the respective conditions. Additional limitations (other than geographical or age-based limitations) can be envisioned, such enterprise users, anonymous users, etc.

The language preference setup component 224 can set, update, or otherwise modify the language preferences of a respective user associated with a user identifier in profiles 156. In some implementations, the language preference setup component 224 can access the device settings data 214 to identify default language settings for the corresponding user device. The language preference setup component 224 can set the default language setting as the spoken language in spoken language data 216 and/or the default language setting as the listening language data 218. In some implementations, the language preference setup component 224 can provide a request for the user to provide their preferred spoken language(s) and/or their preferred listening language(s). The language preference setup component 224 can cause a request for language preferences to be displayed on a UI o f the respective client device (e.g., UI 124A-124A of client device 102A-102N). The language preference setup component 224 provide the request for language preferences when a user joins a virtual meeting (e.g., virtual meeting 122), when a user first accesses the platform 120, when a user creates a profile with the virtual platform 120, upon a user request to enable the speech-to-speech translation feature of the platform 120, and/or at another appropriate time. In response to the request, the user can specify one or more languages the they speak, and one or more languages that they understand. The language preference setup component 224 can store the one or more languages that the user indicated they speak as spoken language data 216, and can store the one or more languages that the user indicated they understand as listening language data 218. As an illustrative example, a participant may indicate that they understand one or more languages (e.g., English), but may prefer not to speak it. Thus, the participant can indicate English as a listening language, but may not indicate English as a spoken language. Thus, if another participant speaks English, the translation engine 150 may determine to provide that participant with the original audio, however when the participant speaks, the translation engine 150 may determine to provide a translation to the other participant.

In some implementations, the language preference setup component can enable a user to rank the languages they speak and/or understand in order of preference, and the speech-to-speech translation feature can use the highest ranked language as the translation language for the respective client device 102A-N, 104. The ranking(s) can be stored in profiles 156.

**FIG. 3** is a block diagram illustrating an example language matching system 300, in accordance with at least one embodiment of the present disclosure. The enrollment system 200 can include a language matching module 152 and one or more data store(s) 106. The language matching module 152 can access the data store 106, e.g., via a network 108 of **FIG. 1****.** The language matching module 152can be a software program hosted by a device (e.g., platform 120, server device 130, 140, client device 102A-102N, 104) to enable a user to enroll in the native speech-to-speech audio translation feature provided of the platform 120. The language matching module 152 and/or the data store 106 can be the same as, or perform the same functions as, language matching module 152 and data store 106 of **FIG. 1****,** respectively

The language matching module 152 can include a language identification component 322, a language matching component 324, and/or a translation routing component 326. Each of the language identification component 322, the language matching component 324, and/or the translation routing component 326 can include a software application (or a subset thereof) that performs a certain functionality for language matching module 152. The language identification component 322, the language matching component 324, and/or the translation routing component 326 can be combined together or separated into further components, according to a particular implementation. It should be noted that in some implementations, various components of the language matching module 152 can run on separate machines. In embodiments, each of the components can be or include logic configured to perform a particular action or set of actions. In embodiments, one or more of the components can be combined into a single component. In embodiments, the functions of one or more components can be divided into sub-components.

In some implementations, data store 106 can store media stream data 152 (which can include media stream portion(s) 153 and original audio portion(s) 154), translated audio portions 155, and/or profiles 156, as described with respect to **FIGs. 1-2** and throughout.

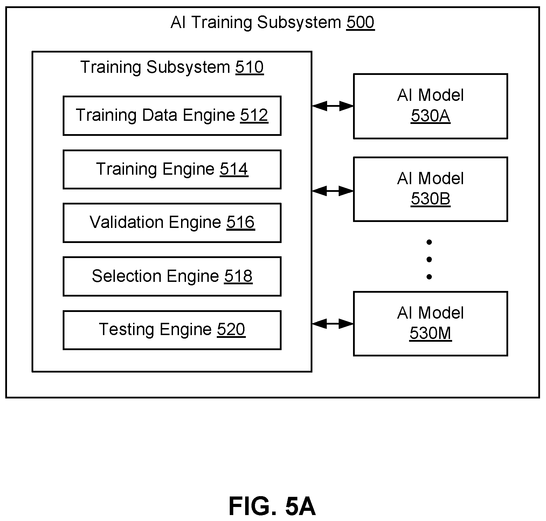

Language identification component 322 can receive (or otherwise identify) an original audio portion 154 of data store 106. Language identification component 322 can identify the language of the original audio portion 154. In some implementations, the language identification component 322 can identify the language of the original audio portion 154 as determined by another component of translation engine 150. In some implementations, the language identification component 322 can include or otherwise interface with an AI model that provides an indication of the language of the audio. The AI model can correspond to one of AI model(s) 141 of **FIG. 1****,** and/or can be further described with respect to **FIGs. 5A-5B****.**

In some implementations, the language identification component 322 can identify the language of the original audio portion 154 using the spoken language data 216. The spoken language data 216 can indicate in which language each active participant of the virtual meeting speaks. The language identification model 322 can identify the spoken language of the active participant of the client device 102A-N, 104 from which the original audio portion 154 is received.

In some implementations, the AI model can provide multiple spoken language identified in the original audio portion. In some implementations, each identified spoken language can have a corresponding confidence score, and the language identification component 322 can identify the language with the highest confidence score as the identified spoken language of the original audio portion 154. In some implementations, the language identification component 322 can compare the confidence score of each identified spoken language provided by the AI model to a confidence threshold. For those identified languages that have a confidence score that exceeds the threshold, the language identification component 322 can compare the identified language to the spoken language data 216 of the participant from which the audio originated (e.g., from the client device 102A-N that provided the original audio portion). The language identification component 322 can identify the spoken language as the identified language (that optionally has a confidence score exceeding the threshold) of the multiple identified languages provided by the AI model that matches the spoken language data 216 of the profile of the participant from which the original audio portion originated.

Language matching component 324 can identify the collective language preferences of the active participants (e.g., the participants of a virtual meeting that have provided consent and/or enabled the speech-to-speech translation feature for the virtual meeting). The active participants can be a subset of the participants of the virtual meeting. The language matching component 324 can identify the language preferences using the listening language data 218 of the profiles 156 of each active participant. The language matching component 324 can dynamically and/or automatically adjust the matching as participants join or leave the virtual meeting, update their consent status, enable/disable the speech-to-speech translation feature, change their language preferences in their profile, and/or as the spoken language (identified by language identification component 322) changes. The language matching component 324 identifies which participant(s) receive the original audio (e.g., which participant(s) have indicated that they understand the identified spoken language in listening language data 218), and which participant(s) receive a translation of the original audio portion 154 (e.g., which participant(s) have not indicated that they understand the identified spoken language in listening language data 218). In some implementations, the language matching component 324 identifies multiple listening languages for a participant, and can determine that the participant is to receive a translation if the identified spoken language does not match any of the multiple listening languages. In some implementations, the language matching component 324 identifies multiple listening languages for a participant, and can determine that the participant is to receive a translation if the identified spoken language does not match the top ranked (or the x top ranked) of the multiple listening languages.

Translation routing component 326 can determine an optimal translation routing for the original audio portion 154 during a virtual meeting. The translation routing component 326 can use the language matching determined by the language matching component 324 to route the original audio portion 154 for simultaneous translation into the identified language(s) during the virtual meeting. As an illustrative example, if the language identification component 322 identifies the language of original audio portion 154 as English (e.g., the speaker is speaking English during the virtual meeting), and the language matching component 326 has identified one active participant that have a profile that indicates their listening language as Russian (e.g., who prefers to listen in Russian) and two active participants that have a profile that indicates their listening language as French, the translation routing component 326 can cause the original audio portion 154 to be translated into both Russian and French simultaneously. To further the example, the participant that indicated their listening language as Russian may decide they would rather hear the original audio, and thus adjusts their language preferences to include English as a listening language. In this example, the translation routing component 326 can stop the routing of the Russian translation in real-time, and cause the original audio portion 154 to be provided to the corresponding client device 102A-N of that participant. Thus, the translation routing component 326 can dynamically and/or automatically adjust the translation routing as participants join or leave the virtual meeting, as participants enable or disable the speech-to-speech translation feature, as participants provide consent (or withdraw consent), and/or as participants change their language preferences. In some implementations, the translation routing component 326 can cause the original audio portion 154 to be translated into one or more languages, and store the translations as translated audio portions 155. In some implementations, the translations can be generated by an AI model, e.g., one of AI models 141 of **FIG. 1****,** and/or as further described with respect to **FIGs. 5A-B****.** In some implementations, the translation routing component 326 can provide one of the translated audio portions 155 and/or the original audio portion 154 to a corresponding client device 102AN, 104, in accordance with their spoken language preference as indicated by spoken language data 218.

In some implementations, the virtual meeting platform 120 can monitor, in real-time, the presence of the plurality of users in the virtual meeting 122. When a user of at least the subset of the plurality of users leaves the virtual meeting 122, the platform (e.g., the translation engine 150) can identify the departure, for example, via the virtual meeting manager 132. Following, e.g. responsive to, identification of the departure of the user and responsive to determining that no remaining user in at least the subset of the plurality of users has language preferences corresponding to a specific second language of the one or more second audios, the platform (e.g., the translation engine 150) can cause generation of the second audio for that specific second language to be ceased. This dynamic de-allocation may optimize computing resources, such as processing power for AI model(s) and network bandwidth, by terminating production of unnecessary audio streams.

In some implementations, when an additional user joins the virtual meeting 122, the platform (e.g., the translation engine 150) can identify the additional user's language preferences. The platform (e.g., the translation engine 150) can also determine, based on a profile 156 of the additional user, whether a translation condition is satisfied. If the translation condition is satisfied and a specific second language of the one or more second audios already being generated matches the language preferences of the additional user, the existing second audio can be routed (e.g., by the translation routing component 326) to the user device of the additional user. This may be performed by causing the second audio that is in the specific second language to be added to the first media stream 152 provided to the user device of the additional user. By utilizing a second audio already in production for other users, the system may avoid redundant AI generation cycles and improve platform scalability.

In some implementations, the virtual meeting platform 120 can identify changes in users' language preferences during an ongoing virtual meeting 122. For example, if the platform identifies that a particular user's preferences have been updated during the meeting such that the identified first language of the first audio matches the updated language preferences, the translation engine 150 can identify this match in real-time. Responsive to this identification, the platform (e.g., the translation engine 150) may cause the addition of the respective second audio to the first media stream 152 provided to the user device of the particular user to be ceased. Consequently, the particular user may receive the first audio and not the respective second audio.

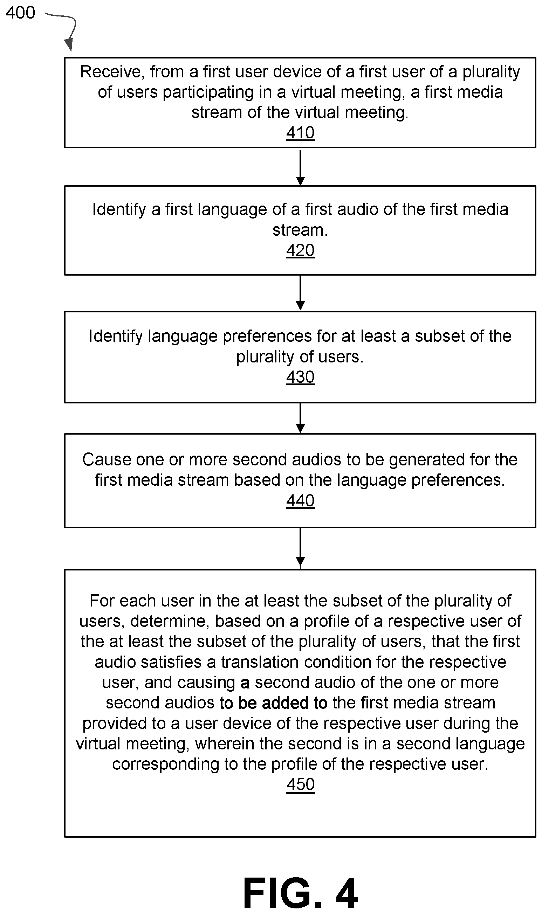

**FIG. 4** is a flow diagram of an example method 400 for providing simultaneous translation with dynamic language adaptation during virtual meeting, according to at least one embodiment. Method 400 can be performed by processing logic that can include hardware (circuitry, dedicated logic, etc.), software (e.g., instructions run on a processing device), or a combination thereof. In at least one implementation, some or all of the operations of method 400 can be performed by one or more components of server device(s) 130, 140 of **FIG. 1****.** In other implementations, some or all of the operations of method 400 can be performed by one or more components of client devices 102A-102N, 104, and/or virtual meeting platform 120 of **FIG. 1****.**

For simplicity of explanation, the methods of this disclosure are depicted and described as a series of acts. However, acts in accordance with this disclosure can occur in various orders and/or concurrently, and with other acts not presented and described herein. Furthermore, not all illustrated acts can be required to implement the methods in accordance with the disclosed subject matter. In addition, those skilled in the art will understand and appreciate that the methods could alternatively be represented as a series of interrelated states, e.g., via a state diagram. Additionally, it should be appreciated that the methods disclosed in this specification are capable of being stored on an article of manufacture to facilitate transporting and transferring such methods to computing devices. The term "article of manufacture," as used herein, is intended to encompass a computer program accessible from any computer-related device or storage media.

At block 410, processing logic receives, from a first user device of a first user of a plurality of users participating in a virtual meeting, a first media stream of the virtual meeting (e.g., virtual meeting 122 of **FIG. 1**). In some embodiments, the first user device can correspond to client device 102A of **FIG. 1****.**

At block 420, processing logic identifies a first language of a first audio of the first media stream. In some embodiments, processing logic identifies the first language using an AI model. In some embodiments, processing logic can provide audio data corresponding to audio received from the user device as input to the AI model. In some implementations, the audio received from the user device may be preprocessed to generate audio data that can be provided as input to the AI model. The AI model can be trained to output an identified language of the audio. Thus, processing logic can receive, as output from the AI model, the identified language. In some implementations, the AI model can correspond to one or more of AI model(s) 141 of **FIG. 1****.** In some implementations, the AI model is further described with respect to **FIGs. 5A-****5B.** In some implementations, the AI model can output more than one identified language, each with a corresponding confidence score. The processing logic can identify the first language of the first audio as the identified language with the highest score. Additionally or alternatively, the processing logic can compare the confidence score of each identified language to a threshold confidence score (e.g., a minimum acceptable confidence score). If multiple identified languages have a confidence score that exceeds the threshold confidence score, the processing logic can identify the first language as one of the identified languages (output by the AI model) that has a confidence score exceeding the threshold confidence score and that matches the identified preferred spoken language from the profile of the first user.

In some embodiments, the first media stream can include multiple portions. A first portion can be in the first language, and a second portion can be in a different language. In such cases, the first audio can correspond to the first portion in the first language. In some embodiments, the processing logic can identify (e.g., via audio data selection module 151 of **FIG. 1**) a part of the first media stream where the audio changes from the first language to a different language. In such cases, the first audio can end at the identified part of the first media stream. That is, the first audio can correspond to a particular language, and if the first user begins speaking in a different language, the processing can identify the point at which the first user begins speaking in a different language (different from the first language identified at block 420), and ends the first audio at that point.

At block 430, processing logic identifies language preferences for at least a subset of the plurality of users. In some embodiments, the subset can correspond to a set of users for which the consent data of the user's profile indicates "consent." As an illustrative example, the subset of the plurality of users can exclude the users that have not provided consent, and/or that do not meet the consent requirements (e.g., that do not satisfy the age and/or geographic restrictions).

At block 440, processing logic causes one or more second audios to be generated for the first media stream based on the language preferences. In some embodiments, processing logic can cause the one or more second audios to be generated simultaneously. In some embodiments, processing logic can cause the one or more second audios to be generated using an AI model that is trained to provide translations of audio in different languages. Processing logic can identify, based on the language preferences, one or more second languages. Processing logic can provide, as input to the AI model, the first audio and the one or more second languages. The AI model can be trained to provide additional audios. Each of the additional audios can be a translation of the first audio in one of the one or more second languages. Processing logic can receive, as output from the AI model, the one or more second audios. In some implementations, the AI model can correspond to one or more of AI model(s) 141 of **FIG. 1****.** In some implementations, the AI model is further described with respect to **FIGs. 5A-5B****.**

At block 450, for each user in the at least the subset of the plurality of users, processing logic determines, based on a profile of a respective user of the at least the subset of the plurality of users, that the first audio satisfies a translation condition for the respective user. Processing logic can cause a respective second audio of the one or more audios to be added to the first media stream provided to a user device of the respective user during the virtual meeting, wherein the respective second audio is in a second language corresponding to the profile of the respective user. In some implementations, processing logic can cause both the first audio and the respective second audio to be provided to the user device of the respective user during the virtual meeting. For example, playback of the second audio can overlay playback of the first audio. In some implementations, processing logic can cause the first audio to be replaced with the respective second audio in the first media stream provide to the user device of the respective user during the virtual meeting.

In some embodiments, causing the respective second audio of the one or more second audios to be added to the first media stream provided to the user device of the respective user during the virtual meeting can be performed in real-time. As used herein, in real-time can refer to a process or operation that is performed with negligible latency. In some implementations, processing logic can implement audio replacement module 157 to cause the respective second audio to be added to the first media stream provided to the user device of the respective user during the virtual meeting.

In some embodiments, the profile of the respective user can include the language preferences of the respective user, e.g., as described with respect to profiles 156 of **FIGs. 1-3****.** The language preferences can include one or more spoken language preferences and/or one or more listening language preferences. In some embodiments, the translation condition for the respective user is satisfied if the first language (e.g., identified at block 420) does not match at least one of the one or more listening language preferences of the profile of the respective user. In some embodiments, the first language (e.g., identified at block 420) is one of the one or more spoken language preferences of the first user.

In some embodiments, the profile of the respective user includes an indication of consent for translation. In some embodiments, at least the subset of the plurality of users includes one or more of the plurality of users for which the respective profile comprises the indication of consent for translation.

**FIG. 5A** illustrates a schematic block diagram for an example artificial intelligence (AI) training subsystem 500 to train one or more AI models 530A-M, in accordance with some implementations of the present disclosure. As illustrated in **FIG. 5A****,** the AI training subsystem 500 can include a training subsystem 510, which can include a training data engine 512, a training engine 514, a validation engine 516, a selection engine 518, or a testing engine 520. The AI training subsystem 500 can include one or more AI models 530A-M.

In one implementation, an AI model 530A-M includes one or more of artificial neural networks (ANNs), decision trees, random forests, support vector machines (SVMs), clustering-based models, Bayesian networks, or other types of machine learning models. ANNs generally include a feature representation component with a classifier or regression layers that map features to a target output space. The ANN can include multiple nodes ("neurons") arranged in one or more layers, and a neuron can be connected to one or more neurons via one or more edges ("synapses"). The synapses can perpetuate a signal from one neuron to another, and a weight, bias, or other configuration of a neuron or synapse can adjust a value of the signal. Training the ANN can include adjusting the weights or other features of the ANN based on an output produced by the ANN during training.

An ANN can include, for example, a convolutional neural network (CNN), recurrent neural network (RNN), or a deep neural network. A CNN, a specific type of ANN, hosts multiple layers of convolutional filters. Pooling is performed, and non-linearities can be addressed, at lower layers, on top of which a multi-layer perceptron is commonly appended, mapping top layer features extracted by the convolutional layers to decisions (e.g., classification outputs). A deep network can include an ANN with multiple hidden layers or a shallow network with zero or a few (e.g., 1-2) hidden layers. Deep learning is a class of machine learning algorithms that use a cascade of multiple layers of nonlinear processing units for feature extraction and transformation. Each successive layer uses the output from the previous layer as input. An RNN is a type of ANN that includes a memory to enable the ANN to capture temporal dependencies. An RNN is able to learn input-output mappings that depend on both a current input and past inputs. The RNN will address past and future measurements and make predictions based on this continuous measurement information. One type of RNN that can be used is a long short term memory (LSTM) neural network.

ANNs can learn in a supervised (e.g., classification) or unsupervised (e.g., pattern analysis) manner. Some ANNs (e.g., such as deep neural networks) can include a hierarchy of layers, where the different layers learn different levels of representations that correspond to different levels of abstraction. In deep learning, each level learns to transform its input data into a slightly more abstract and composite representation.

In some implementations, an AI model 530A-M is an AI model that has been trained on a corpus of data. For example, the AI model 530A-M can be an AI model that is first pre-trained on a corpus of data to create a foundational model, and afterwards fine-tuned on more data pertaining to a particular set of tasks to create a more task-specific, or targeted, model. The foundational model can first be pre-trained using a corpus of data that can include data in the public domain, licensed content, and/or proprietary content. In some implementations, this first foundational model is trained using self-supervision, or unsupervised training on such datasets.

In some implementations, the second portion of training, including fine-tuning, includes unsupervised, supervised, reinforced, or any other type of training. In some implementations, this second portion of training includes some elements of supervision, including learning techniques incorporating human or machine-generated feedback, undergoing training according to a set of guidelines, or training on a previously labeled set of data, etc. In a non-limiting example associated with reinforcement learning, the outputs of the AI model 530A-M while training can be ranked by a user, according to a variety of factors, including accuracy, helpfulness, veracity, acceptability, or any other metric useful in the fine-tuning portion of training. In this manner, the AI model 530A-M can learn to favor these and any other factors relevant to users when generating a response. Further details regarding training are provided below.

In some implementations, an AI model 530A-M includes one or more pre-trained models, or fine-tuned models. In a non-limiting example, in some implementations, the goal of the "fine-tuning" can be accomplished with a second, or third, or any number of additional models. For example, the outputs of the pre-trained model can be input into a second AI model 530A-M that has been trained in a similar manner as the "fine-tuned" portion of training above. In such a way, two more AI models 530A-M can accomplish work similar to one model that has been pre-trained, and then fine-tuned.

In some implementations, the training subsystem 510 manages the training and testing of an AI model 530A-M. The training data engine 512 can generate training data. For example, in the present disclosure the training data can include video and/or audio content. The audio content of the training data can include audio streams of participants participating in a virtual meeting. The video content of the training data can include video streams of participants participating in a virtual meeting. In some implementations, the audio of the video streams can be extracted from the video streams and used as audio content of the training data. In some implementations, the audio training data can include a recording of a person speaking (e.g., an audio recording and/or a video recording). In some implementations, the audio content is included in the video content. The audio data can include one or more phonemes, word fragments, words, sentences, or other portions of speech. Each piece of audio training data can include a corresponding target output that includes an indication of the language of the piece of audio. The training engine 514 can use the audio content training data to train one or more of AI models 530A-M configured to identify a spoken language of the audio, one or more of AI models 530A-M to identify a location in the audio that the language changes from a first language to a second language, and/or one or more of AI models 530A-M to generate an audio translation of the audio from a first language to a second language (an indication of the second language can be provided in the audio content training data). The video content can include one or more video streams of participants participating in a virtual meeting (e.g., speaking, listening, sharing, etc.). The video content can include video content of a participant speaking, presenting, sharing documents, images, etc., during a virtual meeting. Each piece of video training data can include a target output that includes an indication of the language of the audio portion of the video. The training engine 514 can use the video content training data to train one or more of AI models 530A-M configured to identify a spoken language of the audio, one or more of AI models 530A-M to identify an location in the audio that the language changes from a first language to a second language, and/or one or more of AI models 530A-M to generate a translation of the audio from a first language to a second language (an indication of the second language can be provided in the audio content training data).

In an illustrative example, the training data engine 512 can initialize a training set T to null (e.g., {}). The training data engine 512 can add the training data to the training set T and can determine whether training set T is sufficient for training a AI model 530A-M. The training set T can be sufficient for training the AI model 530A-M if the training set T includes a threshold amount of training data, in some implementations. In response to determining that the training set T is not sufficient for training, the training data engine 512 can identify additional data to use as training data. In response to determining that the training set T is sufficient for training, the training data engine 512 can provide the training set T to the training engine 514.

The training engine 514 can train an AI model 530A-M using the training data (e.g., training set T). The AI model 530A-M can refer to the model artifact that is created by the training engine 514 using the training data, where such training data can include training inputs and, in some implementations, corresponding target outputs. The training engine 514 can input the training data into the AI model 530A-M so that the AI model 530A-M can find patterns in the training data and configure itself based on those patterns.

Where the AI model 530A-M uses supervised learning, the training engine 514 can assist the AI model 530A-M in determining whether the AI model 530A-M maps the training input to the target output. Where the AI model 530A-M uses unsupervised learning, the training engine 514 can input the training data into the AI model 530A-M The AI model 530A-M can configure itself based on the input training data, but since the training data may not include a target output, the training engine 514 may not assist the AI model 530A-M in determining whether the AI model 530A-M provided a correct output during the training process.

The validation engine 516 can be capable of validating a trained AI model 530A-M using a corresponding set of features of a validation set from the training data engine 512. The validation engine 516 can determine an accuracy of each of the trained AI models 530A-M based on the corresponding sets of features of the validation set. Where the training data may not include a target output, validating a trained AI model 530A-M can include obtaining an output from the AI model 530A-M and providing the output to another entity for evaluation. The other entity can include another AI model 530A-M configured to evaluate the output of the AI model 530A-M that is undergoing training. The other entity can include a human. The validation engine 516 can discard a trained AI model 530A-M that has an accuracy that does not meet a threshold accuracy or that otherwise fails evaluation. In some implementations, the selection engine 518 is capable of selecting a trained AI model 530A-M that has an accuracy that meets a threshold accuracy. In some implementations, the selection engine 518 can be capable of selecting the trained AI model 530A-M that has the highest accuracy of multiple trained AI models 530A-M. In some implementations, the selection engine 518 receives input from another AI model 530A-M or a human and can select a trained AI model 530A-M based on the input.

The testing engine 520 can be capable of testing a trained AI model 530A-M using a corresponding set of features of a testing set from the training data engine 512. For example, a first trained AI model 530A that was trained using a first set of features of the training set can be tested using the first set of features of the testing set. The testing engine 520 can determine a trained AI model 530A-M that has the highest accuracy or other evaluation of all of the trained AI models 530A-M based on the testing sets.

In some implementations, the training engine 514 trains an AI model 530A. The AI model 530A can identify a language of audio provided as input. The training data engine 512 can generate training data that includes one or more identified languages. In some implementations, each identified language can have a corresponding confidence score. The confidence score can represent the likelihood that the input audio is in the identified language. The training engine 514 can cause the AI model 530A to undergo an AI model training process using the training data. The AI model 530A can undergo a validation and testing process using the validation engine 516 and testing engine 520.

In some implementations, the training engine 514 trains an AI model 530B. The AI model 530B can identify a timestamp (or other indicator) of when the input audio changes from a first language to a second language. The training data engine 512 can generate training data that includes one or more indicators of a language switch in the input audio. In some implementations, each indicator can have a corresponding confidence score that represents the likelihood that the audio has switched from one language to another. The training engine 514 can cause the AI model 530B to undergo an AI model training process using the training data. The AI model 530B can undergo a validation and testing process using the validation engine 516 and testing engine 520.

In some implementations, the training engine 514 trains an AI model 530C. The AI model 530C can generate an audio translation from a first language (e.g., identified by AI model 530A or provided as input), to a second language (e.g., as indicated by input). The training data engine 512 can generate training data that includes translations from the first language to the second language. In some implementations, each translation can have a corresponding confidence score that represents the accuracy of the translation. The training engine 514 can cause the AI model 530C to undergo an AI model training process using the training data. The AI model 530C can undergo a validation and testing process using the validation engine 516 and testing engine 520.

In some implementations, the AI training subsystem 500 is part of the server 140, 130, the platform 120, or the virtual meeting manager 132. Alternatively, the AI training subsystem 500 can be part of another server, system, sub-system, or it can be an independent system. In some implementations, the AI training subsystem 500 provides the trained one or more AI models 530A-M to the virtual meeting manager 132.

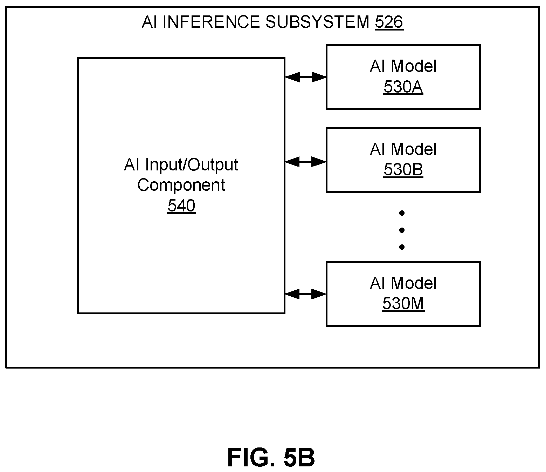

**FIG. 5B** illustrates a schematic block diagram for an AI inference subsystem 526 of a virtual meeting platform 120, that the translation engine 150 can use to perform one or more operations, in accordance with at least one embodiment of the present disclosure. The AI inference subsystem 526 can include one or more AI models 530A-M. The one or more AI models 530A-M can include one or more of the AI models 530A-M trained by the AI training subsystem 500, as described with respect to **FIG. 5A****.**

In some implementations, the AI inference subsystem 526 includes an AI input/output component 540. The AI input/output component 540 can be configured to feed data as input to an AI model 530A-M, e.g., one or more media streams received from client devices 102A-102N, 104, and/or profile data 156. The AI input/output component 540 can be configured to obtain one or more outputs from the one or more AI models 530A-M and provide the one or more outputs to the translation engine 150. The output(s) can include an indication of a spoken language, an indication of a language switch in the audio of the media stream, and/or a generated translation of the audio in a different language. In some implementations, the output(s) have a corresponding confidence score that reflects a probability of accuracy.

**FIG. 6** is a block diagram illustrating an exemplary computer system 600, in accordance with at least one embodiment of the present disclosure. The computer system 600 can correspond to server device 130, 140, platform 120, and/or client devices 102A-102N, 104 in **FIG. 1****.** The machine can operate in the capacity of a server or an endpoint machine in an endpoint-server network environment, or as a peer machine in a peer-to-peer (or distributed) network environment. The machine can be a television, a personal computer (PC), a tablet PC, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processing device (processor) 602, a main memory 604 (e.g., volatile memory, read-only memory (ROM), flash memory, dynamic random access memory (DRAM) such as synchronous DRAM (SDRAM), double data rate (DDR SDRAM), or DRAM (RDRAM), etc.), a static memory 606 (e.g., non-volatile memory, flash memory, static random access memory (SRAM), etc.), and a data storage device 616, which communicate with each other via a bus 630.

Processor (processing device) 602 represents one or more general-purpose processing devices such as a microprocessor, central processing unit, or the like. More particularly, the processor 602 can be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor 602 can also be one or more special-purpose processing devices such as an application specific integrated circuit (ASIC), a field programmable gate array (FPGA), a digital signal processor (DSP), network processor, or the like. The processor 602 is configured to execute instructions 626 (e.g., for providing simultaneous translation with dynamic language adaptation during a virtual meeting) for performing the operations discussed herein.

The computer system 600 can further include a network interface device 608. The computer system 600 also can include a video display unit 610 (e.g., a liquid crystal display (LCD) or a cathode ray tube (CRT)), an input device 612 (e.g., a keyboard, and alphanumeric keyboard, a motion sensing input device, touch screen), a cursor control device 614 (e.g., a mouse), and a signal generation device 618 (e.g., a speaker).

The data storage device 616 can include a non-transitory machine-readable storage medium 624 (also computer-readable storage medium) on which is stored one or more sets of instructions 626 (e.g., for providing simultaneous translation with dynamic language adaption during a virtual meeting) embodying any one or more of the methodologies or functions described herein. The instructions can also reside, completely or at least partially, within the main memory 604 and/or within the processor 602 during execution thereof by the computer system 600, the main memory 604 and the processor 602 also constituting machine-readable storage media. The instructions can further be transmitted or received over a network 620 via the network interface device 608.

In one implementation, the instructions 626 include instructions for providing simultaneous translation with dynamic language adaptation during a virtual meeting. While the computer-readable storage medium 624 (machine-readable storage medium) is shown in an exemplary implementation to be a single medium, the terms "computer-readable storage medium" and "machine-readable storage medium" should be taken to include a single medium or multiple media (e.g., a centralized or distributed database, and/or associated caches and servers) that store the one or more sets of instructions. The terms "computer-readable storage medium" and "machine-readable storage medium" shall also be taken to include any medium that is capable of storing, encoding or carrying a set of instructions for execution by the machine and that cause the machine to perform any one or more of the methodologies of the present disclosure. The terms "computer-readable storage medium" and "machine-readable storage medium" shall accordingly be taken to include, but not be limited to, solid-state memories, optical media, and magnetic media.

Reference throughout this specification to "one implementation," or "an implementation," means that a particular feature, structure, or characteristic described in connection with the implementation is included in at least one implementation. Thus, the appearances of the phrase "in one implementation," or "in an implementation," in various places throughout this specification can, but are not necessarily, referring to the same implementation, depending on the circumstances. Furthermore, the particular features, structures, or characteristics can be combined in any suitable manner in one or more implementations.

To the extent that the terms "includes," "including," "has," "contains," variants thereof, and other similar words are used in either the detailed description or the claims, these terms are intended to be inclusive in a manner similar to the term "comprising" as an open transition word without precluding any additional or other elements.

As used in this application, the terms "component," "module," "system," or the like are generally intended to refer to a computer-related entity, either hardware (e.g., a circuit), software, a combination of hardware and software, or an entity related to an operational machine with one or more specific functionalities. For example, a component can be, but is not limited to being, a process running on a processor (e.g., digital signal processor), a processor, an object, an executable, a thread of execution, a program, and/or a computer. By way of illustration, both an application running on a controller and the controller can be a component. One or more components can reside within a process and/or thread of execution and a component can be localized on one computer and/or distributed between two or more computers. Further, a "device" can come in the form of specially designed hardware; generalized hardware made specialized by the execution of software thereon that enables hardware to perform specific functions (e.g., generating interest points and/or descriptors); software on a computer readable medium; or a combination thereof.

The aforementioned systems, circuits, modules, and so on have been described with respect to interaction between several components and/or blocks. It can be appreciated that such systems, circuits, components, blocks, and so forth can include those components or specified sub-components, some of the specified components or sub-components, and/or additional components, and according to various permutations and combinations of the foregoing. Sub-components can also be implemented as components communicatively coupled to other components rather than included within parent components (hierarchical). Additionally, it should be noted that one or more components can be combined into a single component providing aggregate functionality or divided into several separate sub-components, and any one or more middle layers, such as a management layer, can be provided to communicatively couple to such sub-components in order to provide integrated functionality. Any components described herein can also interact with one or more other components not specifically described herein but known by those of skill in the art.

Moreover, the words "example" or "exemplary" are used herein to mean serving as an example, instance, or illustration. Any aspect or design described herein as "exemplary" is not necessarily to be construed as preferred or advantageous over other aspects or designs. Rather, use of the words "example" or "exemplary" is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

Finally, implementations described herein include collection of data describing a user and/or activities of a user. In one implementation, such data is only collected upon the user providing consent to the collection of this data. In some implementations, a user is prompted to explicitly allow data collection. Further, the user can opt-in or opt-out of participating in such data collection activities. In one implementation, the collected data is anonymized prior to performing any analysis to obtain any statistical patterns so that the identity of the user cannot be determined from the collected data.

## Claims

1. A method comprising:
receiving, from a first user device of a first user of a plurality of users participating in a virtual meeting, a first media stream of the virtual meeting;
identifying a first language of a first audio of the first media stream;
identifying language preferences for at least a subset of the plurality of users;
causing one or more second audios to be generated for the first media stream based on the language preferences; and
for each user in the at least the subset of the plurality of users, determining, based on a profile of a respective user of the at least the subset of the plurality of users, that the first audio satisfies a translation condition for the respective user, and causing a respective second audio of the one or more second audios to be added to the first media stream provided to a user device of the respective user during the virtual meeting, wherein the respective second audio is in a second language corresponding to the profile of the respective user.

2. The method of claim 1, wherein causing the respective second audio of the one or more second audios to be added to the first media stream provided to the user device of the respective user during the virtual meeting is performed in real-time.

3. The method of claim 1 or claim 2, wherein the profile of the respective user comprises the language preferences for the respective user, wherein the language preferences comprise at least one of: (1) one or more spoken language preferences, or (2) one or more listening language preferences.

4. The method of claim 3, wherein the translation condition for the respective user is satisfied responsive to determining that the first language does not match at least one of the one or more listening language preferences.

5. The method of claim 3 or claim 4, wherein the first language is one of the one or more spoken language preferences of the first user.

6. The method of any one of claims 3 to 5, wherein the profile of the respective user comprises an indication of consent for translation, and wherein the at least the subset of the plurality of users comprises one or more of the plurality of users for which the respective profile comprises the indication of consent for translation.

7. The method of any preceding claim, wherein the first language is identified using an artificial intelligence model.

8. The method of any preceding claim, wherein the first media stream comprises a first portion and a second portion, wherein the first portion is in the first language and the second portion is in a different language, wherein the first audio corresponds to the first portion.

9. The method of any preceding claim, further comprising:
identifying a part of the first media stream where an audio of the first media stream changes from the first language to a different language, wherein the first audio ends at the part of the first media stream.

10. The method of any preceding claim, wherein causing the one or more second audios to be generated for the first media stream based on the language preferences comprises:
identifying, based on the language preferences, one or more second languages;
providing, as input to an artificial intelligence (AI) model, the first audio and the one or more second languages, wherein the AI model is trained to provide the one or more second audios, wherein each of the one or more second audios corresponds to one of the one or more second languages; and
receiving, as output from the AI model, the one or more second audios, wherein each of the one or more second audios corresponds to one of the one or more second languages.

11. The method of any preceding claim, further comprising, while the virtual meeting is ongoing:
monitoring, in real-time, the presence of the plurality of users in the virtual meeting;
determining that a user of the at least the subset of the plurality of users has left the virtual meeting; and
responsive to determining that no remaining user in the at least the subset of the plurality of users has language preferences corresponding to a specific second language of the one or more second audios, causing generation of the second audio that is in the specific second language to be ceased.

12. The method of any preceding claim, further comprising, while the virtual meeting is ongoing:
identifying that an additional user has joined the virtual meeting;
identifying language preferences for the additional user;
determining, based on a profile of the additional user, that the first audio satisfies a translation condition for the additional user;
identifying that a specific second language of the one or more second audios already being generated matches the language preferences of the additional user; and
responsive to identifying the match, routing the second audio that is in the specific second language to a user device of the additional user by causing the second audio that is in the specific second language to be added to the first media stream provided to the user device of the additional user.

13. The method of any preceding claim, further comprising, while the virtual meeting is ongoing:
identifying a change in the language preferences for a respective user of the at least the subset of the plurality of users;
identifying that the first language matches the changed language preferences of the respective user; and
responsive to identifying that the first language matches the changed language preferences of the respective user, causing the addition of the respective second audio to the first media stream provided to the user device of the respective user to be ceased, such that the respective user receives the first audio and not the respective second audio.

14. A system comprising:
a memory device; and
a processing device coupled to the memory device, the processing device to perform the method of any preceding claim.

15. A non-transitory computer readable storage medium comprising instructions for a server that, when executed by a processing device, cause the processing device to perform the method of any one of claims 1 to 13.
